(19) Europäisches Patentamt / European Patent Office / Office européen des brevets

(11) **EP 3 530 532 B1**

(12) **EUROPEAN PATENT SPECIFICATION**

(45) Date of publication and mention
of the grant of the patent:
**31.03.2021 Bulletin 2021/13**

(51) Int Cl.:
***B60T 17/22*** *(2006.01)*

(21) Application number: **19159657.6**

(22) Date of filing: **27.02.2019**

(54) **BRAKE CONTROL**

BREMSSTEUERUNG

COMMANDE DE FREIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2018 GB 201803203
06.07.2018 GB 201811178**

(43) Date of publication of application:
**28.08.2019 Bulletin 2019/35**

(73) Proprietors:
• **Airbus Operations Limited
Bristol BS34 7PA (GB)**
• **AIRBUS OPERATIONS (S.A.S)
31060 Toulouse (FR)**
• **Airbus S.A.S.
31707 Blagnac Cedex (FR)**

(72) Inventors:
• **BILL, Andrew
Bristol, BS34 7PA (GB)**
• **OZA, Utsav
Bristol, BS34 7PA (GB)**

(74) Representative: **EIP
Fairfax House
15 Fulwood Place
London WC1V 6HU (GB)**

(56) References cited:
EP-A1- 2 988 120    EP-A1- 3 088 266
WO-A1-2017/062590    US-A1- 2015 025 735

**Description**

TECHNICAL FIELD

The present invention relates to brake control and particularly, although not exclusively, to brake control taking account of a state, such as an oxidation state, of the brake.

BACKGROUND

Vehicle brakes may include components such as brake discs composed of Carbon-Carbon composites. The brakes may undergo thermal oxidation at high temperatures as carbon atoms in the brake discs react with oxygen. The brakes may need to be serviced or replaced once a certain amount of thermal oxidation has taken place for safe functioning of the vehicle. EP3088266A1 describes a system for activating a desired number of brake assemblies of an aircraft during a taxi braking event. WO2017/062590A1 describes diagnosis and prognosis system for an aircraft brake that predicts when brake service is required. US2015/025735A1 describes a system for estimating the health of an aircraft brake friction material.

SUMMARY

A first aspect of the present invention provides an apparatus comprising: a controller configured to: generate a first indication for a vehicle braking system depending upon an oxidation state of a wheel brake of the vehicle, wherein the controller is configured to: determine a brake temperature characteristic criterion of the brake according to the oxidation state of the brake; determine whether a temperature characteristic of the brake satisfies the brake temperature characteristic criterion; and generate the first indication for the braking system depending upon whether the brake temperature characteristic satisfies the brake temperature characteristic criterion, and wherein: the temperature characteristic of the brake comprises a temperature of the brake; the brake temperature characteristic criterion is satisfied if the temperature of the brake exceeds a brake temperature threshold; and the controller is configured such that the higher the level of thermal oxidation of the brake, the lower the brake temperature threshold of the determined brake temperature characteristic criterion is.

The controller is configured to determine a brake temperature characteristic criterion of the brake according to the oxidation state of the brake; determine whether a temperature characteristic of the brake satisfies the brake temperature characteristic criterion; and generate the first indication for the braking system depending upon whether the brake temperature characteristic satisfies the brake temperature characteristic criterion.

Optionally, the controller receives an indication of the temperature characteristic of the brake from a temperature sensor associated with the brake.

Optionally, the controller receives a predicted temperature characteristic from a brake temperature prediction function as the temperature characteristic of the brake.

Optionally, the controller is configured to: monitor the temperature characteristic of the brake; and if the temperature characteristic of the brake no longer satisfies the brake temperature characteristic criterion, generate a second indication for the braking system that the temperature characteristic of the brake no longer satisfies the brake temperature characteristic criterion.

The temperature characteristic of the brake comprises a temperature of the brake; and the brake temperature characteristic criterion is satisfied if the temperature of the brake exceeds a brake temperature threshold.

The controller is configured such that the higher the level of thermal oxidation of the brake, the lower the brake temperature threshold of the determined brake temperature characteristic criterion is.

Optionally, if the thermal oxidation state of the brake is below a predetermined thermal oxidation level, a first brake temperature characteristic criterion is selected which comprises a first temperature threshold.

Optionally, if the thermal oxidation state of the brake is above the predetermined thermal oxidation level, a second brake temperature characteristic criterion is selected which comprises a second temperature threshold lower than the first temperature threshold

Optionally, the second brake temperature characteristic criterion is selected based on the difference between the thermal oxidation state of the brake and the predetermined thermal oxidation level.

Optionally, the first temperature threshold is above 400°C.

A second aspect of the present invention provides a vehicle comprising an apparatus according to the first aspect and a braking system, the braking system comprising a further controller configured to: receive the first indication; and control the operation of the brake based on the first indication.

Optionally, in the braking system according to the second aspect, the further controller is configured to: receive a second indication that the temperature characteristic of the brake no longer satisfies the brake temperature characteristic criterion; and control the brake selectively to be enabled or disabled based on the received indication.

Optionally, in the braking system according to the second aspect, the further controller is configured to control the brake to be disabled if it receives the first indication.

Optionally, in the braking system according to the second aspect, the further controller is configured to control the brake to be enabled if it receives the second indication.

Optionally, in the braking system according to the second aspect, the vehicle is an aircraft and the further controller is configured to disable a brake if a taxiing criterion is met, wherein the taxiing criterion comprises one or more of: an aircraft speed threshold defined such that an aircraft speed less than or equal to the aircraft speed threshold satisfies the predefined taxiing criterion; and a particular flight phase indicated by a flight phase indication system of the aircraft.

Optionally, in the braking system according to the second aspect, the further controller is configured to: receive a braking request, the braking request comprising information relating to a requested braking intensity; determine, based on the information related to the requested braking intensity, whether the requested braking intensity exceeds a braking intensity threshold; and if the requested braking intensity exceeds the braking intensity threshold, enable at least one disabled brake.

A third aspect of the present invention provides a method for controlling at least one brake of an aircraft, the method comprising: generating a first indication depending upon an oxidation state of a wheel brake of an aircraft; and controlling the brake to be disabled based on the first indication, wherein the method comprises: determining a brake temperature characteristic criterion of the brake according to the thermal oxidation state of the brake; determining whether a temperature characteristic of the brake satisfies the brake temperature characteristic criterion; and generating the first indication depending upon whether the brake temperature characteristic satisfies the brake temperature characteristic criterion, and wherein: the temperature characteristic of the brake comprises a temperature of the brake; the brake temperature characteristic criterion is satisfied if the temperature of the brake exceeds a brake temperature threshold; and the higher the level of thermal oxidation of the brake, the lower the brake temperature threshold of the determined brake temperature characteristic criterion is.

The method according to the third aspect comprises: determining a brake temperature characteristic criterion of the brake according to the thermal oxidation state of the brake; determining whether a temperature characteristic of the brake satisfies the brake temperature characteristic criterion; and generating the first indication depending upon whether the brake temperature characteristic satisfies the brake temperature characteristic criterion.

Optionally, the method according to the third aspect comprises: (i) monitoring the temperature characteristic of the brake; (ii) determining whether the temperature characteristic of the brake still satisfies the brake temperature characteristic criterion; if the temperature characteristic of the brake no longer satisfies the brake temperature characteristic criterion: generating a second indication that the temperature characteristic of the brake no longer satisfies the brake temperature characteristic criterion; and controlling the brake to be enabled based on the second indication; and if the temperature characteristic of the brake still satisfies the brake temperature characteristic criterion, repeating (i) and (ii).

Optionally, the method according to the third aspect comprises receiving an indication of the temperature characteristic of the brake from a temperature sensor associated with the brake.

Optionally, the method according to the third aspect comprises receiving a predicted temperature characteristic from a brake temperature prediction function as the temperature characteristic of the brake.

In the method according to the third aspect, the temperature characteristic of the brake comprises a temperature of the brake; and the brake temperature characteristic criterion is satisfied if the temperature of the brake exceeds a brake temperature threshold.

In the method according to the third aspect, the higher the level of thermal oxidation of the brake, the lower the brake temperature threshold of the determined brake temperature characteristic criterion is.

Optionally, in the method according to the third aspect, if the thermal oxidation state of the brake is below a predetermined thermal oxidation level, a first brake temperature characteristic criterion is selected which comprises a first temperature threshold.

Optionally, in the method according to the third aspect, if the thermal oxidation state of the brake is above the predetermined thermal oxidation level, a second brake temperature characteristic criterion is selected which comprises a second temperature threshold lower than the first temperature threshold.

Optionally, in the method according to the third aspect, the second brake temperature characteristic criterion is selected based on the difference between the thermal oxidation state of the brake and the predetermined thermal oxidation level.

Optionally, in the method according to the third aspect, the first temperature threshold is above 400°C.

Optionally, in the method according to the third aspect, the brake is disabled if a predefined taxiing criterion is met, wherein the predefined taxiing criterion comprises one or more of: an aircraft speed threshold defined such that an aircraft speed less than or equal to the aircraft speed threshold satisfies the predefined taxiing criterion; and a particular flight phase indicated by a flight phase indication system of the aircraft.

Optionally, the method according to the third aspect comprises: receiving a braking request, the braking request comprising information relating to a requested braking intensity; determining, based on the information related to the requested braking intensity, whether the requested braking intensity exceeds a braking intensity threshold; and if the requested braking intensity exceeds the braking intensity threshold, enabling at least one disabled brake.

A fourth aspect of the present invention provides a vehicle according to the second aspect, wherein the vehicle is an aircraft comprising a temperature sensor configured to measure a temperature of a wheel brake of the aircraft and to transmit the temperature measurement to the apparatus.

BRIEF DESCRIPTION OF THE DRAWINGS

Embodiments of the invention will now be described, by way of example only, with reference to the accompanying drawings, in which:

Figure 1 is a schematic view of an aircraft on which examples may be deployed;

Figure 2 is a schematic view of a brake and a wheel of an aircraft landing gear according to an example;

Figure 3 is a schematic view of an apparatus and a braking system of a vehicle according to an example;

Figure 4a is a first flow diagram of a method of controlling at least one brake of an aircraft according to an example;

Figure 4b is a second flow diagram of a method of controlling at least one brake of an aircraft according to an example;

Figure 4c is a third flow diagram of a method of controlling at least one brake of an aircraft according to an example;

Figure 5 is a fourth flow diagram of a method of controlling at least one brake of an aircraft according to an example;

Figure 6 is a flow diagram of an exemplary method of determining the thermal oxidation state of a brake of an aircraft landing gear;

Figure 7 is a flow diagram of an exemplary method of determining the thermal oxidation state of a brake of an aircraft landing gear;

Figure 8 is an exemplary graph illustrating the temperature of a brake with respect to time;

Figure 9 is an exemplary graph illustrating the thermal oxidation state of a brake with respect to time for a specific temperature;

Figure 10 is an exemplary flow diagram of a method of determining an amount of brake wear according to an example; and

Figure 11 is an exemplary flow diagram of a method of predicting a number of good future use cycles with respect to an aircraft brake according to an example.

DETAILED DESCRIPTION

The following disclosure relates to systems and processes for limiting use of a brake of a vehicle, e.g. aircraft brakes, when the brake reaches certain high temperatures, for the purposes of reducing the amount of thermal oxidation of the brake during use.

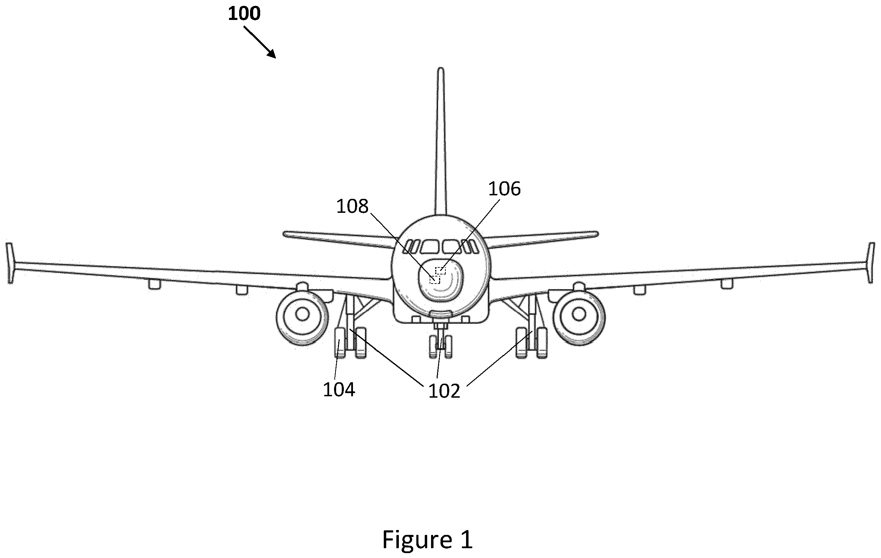

Figure 1 is a simplified schematic view of an aircraft 100. The aircraft 100 comprises a plurality of landing gear assemblies 102. The landing gear assemblies may include main and nose landing gears that may be extended during take-off and landing. Each landing gear assembly 102 includes wheels such as wheel 104. The aircraft 100 comprises a computing system 106, which may, for example, comprise one or more processors and one or more computer readable storage media. The aircraft 100 may also comprise instruments 108, such as instruments or sensors for measuring characteristics or parameters related to the aircraft, and instruments or sensors for measuring environmental characteristics. It should be appreciated that, in some examples, the instruments 108 may be distributed at various different locations of the aircraft 100.

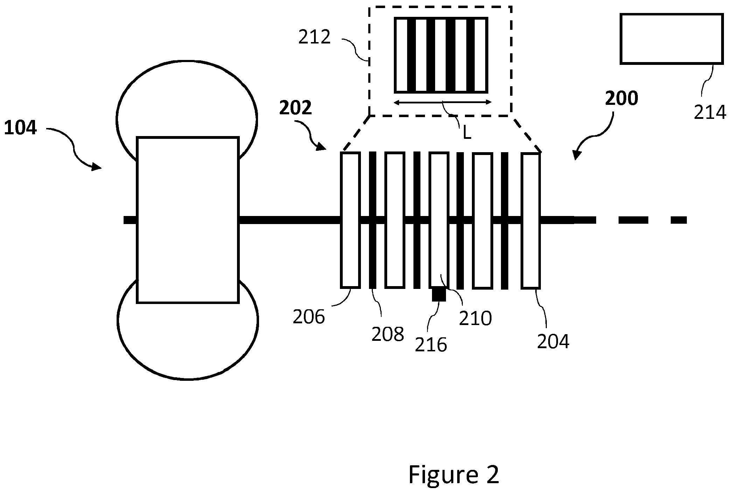

Figure 2 is a simplified schematic view of a brake 200 associated with the wheel 104 of the aircraft 100. Each of the wheels of the aircraft 100 may have associated with it a brake such as brake 200. The brake 200 applies a braking force to inhibit the rotation of the wheel 104. In this example, the brake 200 comprises a plurality of brake discs 202 including a pressure plate 204, a reaction plate 206, and a number of rotors and stators such as the rotor 208 and the stator 210. In this example, the brake discs 202 include a plurality of rotors and stators, and the brake assembly 200 is therefore a multiple disc brake. In other examples, the brake assembly 200 may not be a multiple-disc brake. It will be understood that the type of brake used in an aircraft landing gear depends on the characteristics of the aircraft in question, such as size, carrying capacity and the like.

When the aircraft 100 travels along the ground supported by the landing gear 102, the rotors rotate with the wheel 104, whereas the stators, the pressure plate 204 and the reaction plate 206 do not rotate with the wheel 104. When braking is applied, the pressure plate 204 is urged towards the reaction plate 206 so that the brake discs 202 come into contact with one another (as shown in box 212 of Figure 2) and friction acts to inhibit the rotational motion of the rotors, thus generating a braking force.

Any one or more of the rotors, stators, pressure plate 204 and the reaction plate 206 may be composed of Carbon-Carbon (CC) composites. A brake including brake discs composed of CC composites may be referred to as a carbon brake. For example, the brake discs 202 may be composed of a graphite matrix reinforced by carbon fibers. During use, the brake discs 202 may undergo oxidation. During an oxidation reaction, oxygen reacts with the carbon of the brake discs 202 causing carbon atoms to be removed from the brake discs 202 as carbon dioxide and/or carbon monoxide is produced leading to a loss of mass. The oxidation state/level of the brake 200 may be expressed as an amount of mass lost due to oxidation.

The brake discs 202 may oxidise via catalytic oxidation or thermal oxidation. Catalytic oxidation may occur when the oxidation reaction is aided by the action of a catalyst. For example, alkali metals are known catalysts for oxidation of CC composites. Catalytic oxidation may be relevant in areas where the air has relatively high salinity. Catalytic oxidation may also be relevant at airports that use runway deicers comprising alkali salts. Thermal oxidation of the brake discs 202 may occur if the brake discs 202 reach high temperatures. During use, the brake 200, specifically the brake discs 202, may reach high temperatures. This is because when the brake 200 is applied to reduce the speed of the aircraft 100, some of the kinetic energy of the aircraft 100 is absorbed into the brake assembly 200 as heat causing its temperature to rise. In the present examples, the components of the brake 200 composed of CC composites (i.e. the brake discs 202) undergo oxidation. However, the present disclosure hereafter refers to the oxidation state of the brake 200.

The aircraft 100 may comprise a braking system 214, which controls the operation of the brake 200. The braking system 214 causes the brake 200 to be applied in response to a braking request (e.g. when a pilot of the aircraft 100 presses a brake pedal). For example, the brake 200 may be hydraulically actuated or electrically actuated, and the braking system 214 may control the brake actuation system (not shown) to apply the brake 200. The braking system 214 may communicate with the brake actuation system via a wireless or wired communication link.

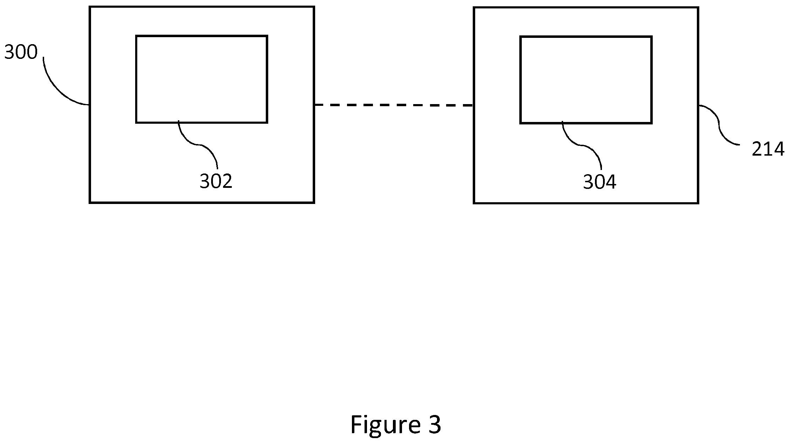

Figure 3 is a simplified schematic view of an apparatus 300 and the braking system 214. The apparatus 300 comprises a controller 302. The controller 302 is configured to generate a first indication for the braking system 214 depending upon an oxidation state of the brake 200. For example, the apparatus 300 may be installed on a vehicle such as the aircraft 100 to generate the first indication in relation to the brake 200. The apparatus 300 may be installed on any kind of vehicle which comprises one or more braked wheels. Nevertheless, for convenience, the following description will be in the context of the aircraft 100.

In the example of Figure 3, the braking system 214 comprises a controller 304. Hereafter, the controller 302 of the apparatus 300 is referred to as the first controller 302 and the controller 304 of the braking system 214 is referred to as the second controller 304, for clarity. The second controller 304 is configured to receive the first indication, the first indication having been generated depending upon the oxidation state of the brake 200 (as described), and control the operation of the brake 200 based on the first indication. The second controller 304 may receive an indication from the first controller 302 via a wired or wireless communication link. Alternatively, the first controller 302 may write information relating to the indication to a computer readable storage medium (not shown) and the second controller 304 may read the information relating to the indication from said computer readable storage medium.

The second controller 304 may be configured to control the brake 200 to be disabled if it receives the first indication. For example, if the brake 200 is disabled, the second controller 304 may assign a "disabled" status to it. That the brake 200 is disabled means that when the braking system 214 receives a braking request, the braking system 214 does not cause the brake 200 to be applied. The required braking may instead be provided by other brakes associated with the other wheels of the landing gear 102.

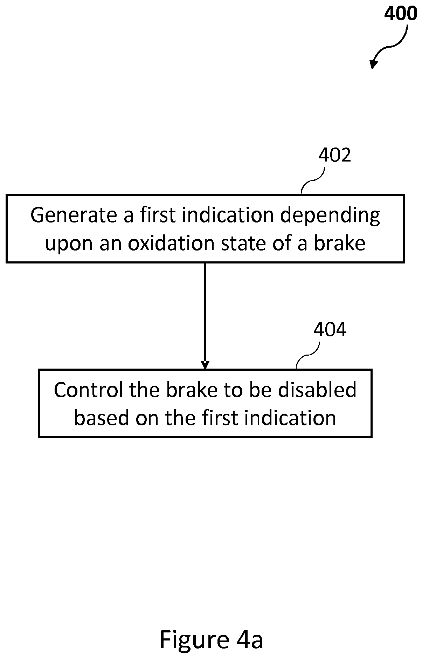

The operation of the first controller 302 and the second controller 304 is illustrated by the flow diagram of Figure 4a, which represents an example method 400 for controlling at least one brake of the aircraft 100. The method 400 may be implemented by the first and second controllers 302, 304. In some examples, the process blocks of the method 400 may be provided as processor-executable instructions (e.g. executable by respective processors of the first and second controllers 302, 304).

At block 402, the first indication is generated depending upon the oxidation state of the brake 200. The first controller 302 of the apparatus 300 performs block 402. At block 402, the first controller 302 receives information regarding the oxidation state of the brake 200 (the source of the information is described in further detail hereafter), for example. The first controller 302 may compare the oxidation state to a particular threshold or may determine a criterion based on the oxidation state and compare certain characteristics of the brake 200 to that criterion. Such comparisons are described in further detail hereafter. The first controller 302 may generate the first indication based on such a comparison. If the first indication is generated, the method 400 proceeds to block 404

At block 404, the brake 200 is controlled to be disabled based on the first indication.

In some examples, the oxidation state of the brake 200 may take into account thermal oxidation (i.e. the oxidation state may be the thermal oxidation state) or catalytic oxidation (i.e. the oxidation state may be the catalytic oxidation state). In some examples, the oxidation state may take into account both thermal oxidation and catalytic oxidation. In the following examples, the oxidation state of the brake 200 takes account of thermal oxidation only.

In some examples, the thermal oxidation state of the brake 200 may be determined using the methods and systems described in an earlier unpublished application, namely GB patent application number 1803203.7, attached hereto as an Annex. For example, the thermal oxidation state of the brake 200 after a braking event/braking operation may be determined using a thermal oxidation model based on an initial thermal oxidation state of the brake 200 before the braking event and a temperature profile of the brake 200 with respect to time. The first controller 302 may receive the thermal oxidation state of the brake 200 from the apparatus which determines the thermal oxidation state of the brake 200. Alternatively, the up-to-date thermal oxidation state of the brake 200 may be stored in a computer readable storage medium (e.g. a computer readable storage medium which is part of the computing system 106), and the first controller 302 may retrieve the thermal oxidation state of the brake 200 from said computer readable storage medium. The first controller 302 may retrieve the thermal oxidation state of the brake 200 each time the thermal oxidation state is updated. In some examples, the first controller 302 may determine the thermal oxidation state of the brake 200 as described in the earlier unpublished application.

As described, the oxidation state may be expressed as an amount of mass lost due to oxidation. In some examples, the first controller 302 may compare the oxidation state of the brake 200 to an oxidation threshold and may generate the first indication if the oxidation threshold is reached. For example, the oxidation threshold may be between 4% and 6.5%, for instance 5.7%, of the original mass of the brake 200 lost due to oxidation. In the example where the oxidation threshold is 5.7%, the oxidation criterion may be satisfied if the thermal oxidation state reaches (i.e. is equal to or above) 5.7% of the original mass of the brake 200 lost. In such examples, the brake 200 may be disabled if it is oxidised beyond a certain level. The oxidation threshold may be set at a level at which service or replacement of the whole or part of the brake 200 is deemed necessary for safe functioning.

Alternatively, or in addition, the first controller 302 may determine a brake temperature characteristic criterion of the brake 200 according to the oxidation state of the brake 200. The first controller 302 may determine whether a temperature characteristic of the brake 200 satisfies the brake temperature characteristic criterion and generate the first indication for the braking system 214 depending upon whether the brake temperature characteristic satisfies the brake temperature characteristic criterion. In the examples where the oxidation threshold is also used and reached by the oxidation state of the brake 200, the first controller 302 may not compare the temperature characteristic to the temperature characteristic criterion. This is because, in such examples, the brake 200 may simply be disabled because it is too oxidised irrespective of the temperature characteristic of the brake 200. The examples described hereafter are in the context of the first controller 302 comparing the temperature characteristic to the temperature characteristic criterion.

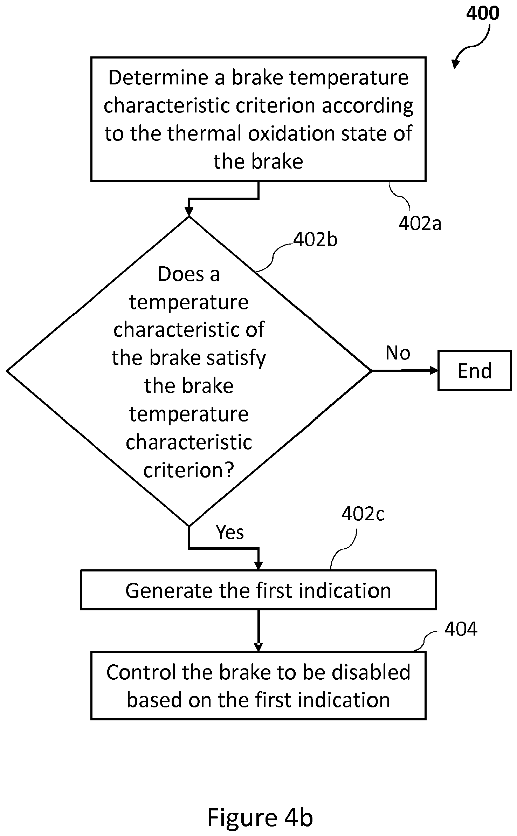

Figure 4b illustrates a particular example of the method 400 in which the brake temperature characteristic criterion is determined and used in order to generate the first indication. Blocks 402a to 402c shown in Figure 4b may be performed as part of block 402 of Figure 4a, e.g. by the first controller 302. At block 402a, the brake temperature characteristic criterion is determined according to the oxidation state of the brake 200. At block 402b, it is determined whether the temperature characteristic of the brake 200 satisfies the brake temperature characteristic criterion. At block 402b, the first controller 302 receives the temperature characteristic of the brake 200 (the source of brake temperature is described in further detail hereafter), for example. The first controller 302 compares the temperature characteristic of the brake received by the first controller 302 to the brake temperature characteristic criterion determined at block 402a to determine whether or not the brake temperature characteristic criterion is satisfied, for example. If the brake temperature characteristic criterion is satisfied, the process proceeds to block 402c.

At block 402c, the first indication is generated depending upon whether the brake temperature characteristic criterion is satisfied. The first indication is generated if the brake temperature characteristic satisfies the brake temperature characteristic criterion. On the other hand, if the brake temperature characteristic criterion is not satisfied at block 402b, the method ends and no indication is generated. However, the block 402b may be performed again when an updated temperature characteristic of the brake is available. If there is a change in the thermal oxidation state of the brake 200, the method according to any of the described examples may be repeated.

At block 404, The brake 200 is controlled to be disabled based on the first indication generated at block 402c. For example, the second controller 304 may be configured to receive the first indication generated depending upon whether a brake temperature characteristic satisfies a brake temperature characteristic criterion. For example, as described, if the first indication is generated, the second controller 304 may receive the first indication and may disable the brake 200.

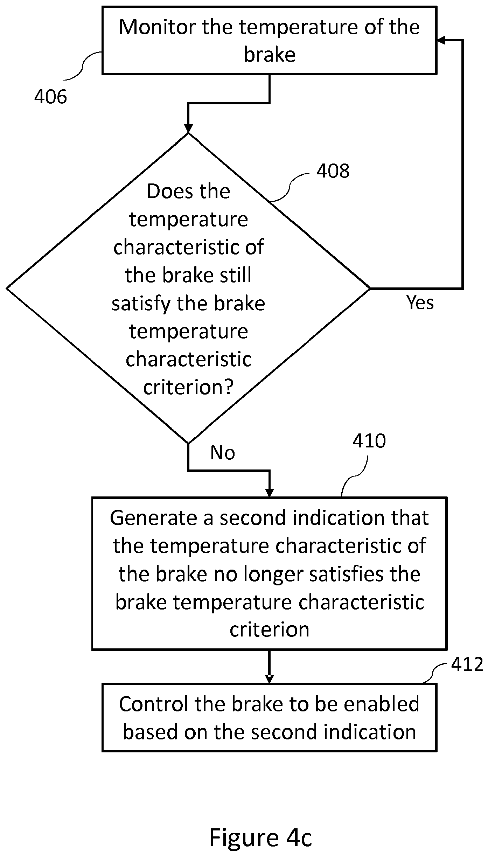

The first controller 302 may be configured to monitor the temperature characteristic of the brake 200, and, if the temperature characteristic of the brake 200 no longer satisfies the brake temperature characteristic criterion, generate a second indication for the braking system 214 that the temperature characteristic of the brake 200 no longer satisfies the brake temperature characteristic criterion. Figure 4c is a flow diagram illustrating additional process blocks which may form part of the method 400. For example, the method 400 may proceed from block 404 to block 406. At block 406 the temperature characteristic of the brake is monitored. For example, measurements of the temperature characteristic as a function of time may be received by the first controller 302. At block 408, it is determined whether or not the temperature characteristic of the brake 200 still satisfies the brake temperature characteristic criterion. For example, the first controller 302 compares an up to date value of the brake temperature characteristic to the brake temperature characteristic criterion. If the temperature characteristic of the brake no longer satisfies the brake temperature characteristic criterion, at block 410 the second indication that the temperature characteristic of the brake no longer satisfies the brake temperature characteristic criterion is generated by the first controller 302.

The second controller 304 may be configured to receive the second indication that the temperature characteristic of the brake no longer satisfies the brake temperature characteristic criterion, and control the brake selectively to be enabled or disabled based on the received indication. As described previously, the second controller 304 may disable the brake 200 if it receives the first indication. The second controller 304 may control the brake 200 to be enabled if it receives the second indication. At block 412, the brake 200 is controlled to be enabled based on the second indication. For examples, if the brake 200 has been disabled and the temperature characteristic of the brake 200 no longer satisfies the brake temperature characteristic criterion, the second controller 304 may change the status of the brake 200 from "disabled" to "enabled". The brake 200 when enabled may once again be controlled by the braking system 214 to provide braking responsive to a braking request.

On the other hand, if the brake temperature characteristic criterion is still satisfied, as determined at block 408, the process returns to block 406 in order to continue monitoring the temperature characteristic of the brake 200, and blocks 406 and 408 are repeated.

The brake temperature characteristic criterion depends on the oxidation state of the brake. In the examples described hereafter, the brake temperature characteristic criterion depends on the thermal oxidation state of the brake 200. Therefore, the brake 200 may be disabled sooner or later (as its temperature increases due to braking) depending on its thermal oxidation state, as explained in further detail hereafter. Managing braking in this manner, to inhibit thermal oxidation of the brake 200, may prolong the life of the brake 200.

The temperature characteristic of the brake may include a temperature of the brake 200 (i.e. a current temperature). The temperature of the brake 200 may specifically be the temperature of the brake discs 202 which may be composed of CC composites as described. It will be appreciated that the temperature of the components composed of CC composites is relevant when controlling the brake 200 to inhibit thermal oxidation because the components composed of CC composites undergo thermal oxidation. In some examples, the temperature characteristic may also include a rate of increase of temperature of the brake 200.

The brake temperature characteristic criterion may be satisfied if the temperature of the brake 200 exceeds a brake temperature threshold. The first controller 302 may be configured such that the higher the level of thermal oxidation of the brake 200, the lower the brake temperature threshold of the determined brake temperature characteristic criterion is. In such examples, if the brake 200 has undergone a large amount of thermal oxidation, the braking system 214 may disable the brake 200 when it reaches a lower temperature as compared to a brake with less thermal oxidation.

In some examples, the brake temperature characteristic criterion may alternatively or in addition include a temperature increase rate threshold. In such examples, where the temperature characteristic includes a rate of increase of temperature of the brake 200, the brake temperature characteristic criterion may be satisfied if the rate of increase of temperature of the brake 200 exceeds the temperature increase rate threshold. The following examples are described in the context of the temperature characteristic comprising a temperature of the brake 200 and the brake temperature characteristic criterion being satisfied if the temperature of the brake 200 exceeds the brake temperature threshold.

In some examples, the thermal oxidation state of the brake 200 may be compared to a predetermined thermal oxidation level. In such examples, if the thermal oxidation state of the brake 200 is below the predetermined thermal oxidation level, the first controller 302 selects a first brake temperature characteristic criterion which comprises a first temperature threshold. The first temperature threshold may be relatively high so that the brake 200 can get relatively hot before being disabled by the braking system 214, but not so hot that there is significant thermal oxidation for a significant period of time.

For some brakes, it may be expected that thermal oxidation may occur at a relatively low rate at temperatures over 400°C and at a relatively higher rate at temperatures over 750°C. There may not be significant thermal oxidation below 400°C. The first temperature threshold may therefore be above 400°C. For such brakes, the first temperature threshold set at, for example, 600°C would allow use of the brakes up to a relatively high temperature without the risk of the temperature reaching a level where there is a relatively high rate of thermal oxidation.

If the thermal oxidation state of the brake 200 is above the predetermined thermal oxidation level, the first controller 302 may select a second brake temperature characteristic criterion which comprises a second temperature threshold lower than the first temperature threshold. Therefore, when the thermal oxidation state of the brake 200 exceeds the predetermined thermal oxidation level, the brake 200 is disabled at a lower temperature. This is so that when the thermal oxidation state of the brake 200 becomes advanced, it is prevented from being exposed to as high temperatures in order to further inhibit thermal oxidation and prolong the life of the brake 200.

In some examples, the second temperature threshold may be 400°C. In some examples, the second brake temperature characteristic criterion may be selected based on the difference between the thermal oxidation state of the brake 200 and the predetermined thermal oxidation level. For example, above the predetermined thermal oxidation level, the greater the level of thermal oxidation of the brake 200, the lower the second temperature threshold may be. For example, the second temperature threshold may be a value under 600°C and may decrease as the thermal oxidation state of the brake 200 continues to increase above the predetermined thermal oxidation level.

The first controller 302 may determine the brake temperature characteristic criterion by using the thermal oxidation state of the brake 200 as an input into an algorithm for determining the brake temperature characteristic criterion. The algorithm may take account of the physical properties of the brake 200. For example, it may be the case that the brake 200 undergoes thermal oxidation at a high rate below a temperature of 750°C. In such an example, the first temperature threshold may be set lower than 600°C. The first controller 302 may implement instructions stored on a computer readable storage medium (e.g. one included in the computing system 106) to perform the algorithm. In some examples, the first controller 302 may access (from a computer readable storage medium to which it has access) a look-up table, which stores thermal oxidation states of the brake 200 and corresponding predetermined brake temperature characteristic criteria. The first controller 302 may determine the brake temperature characteristic criterion using the look-up table. In some examples, the first controller 302 may be configured to generate such a look-up table using an algorithm of the aforementioned kind.

As described, thermal oxidation of the brake discs 202 may occur at high temperatures. The brake 200 of the aircraft 100 may need to be serviced or replaced once the oxidation state of the brake 200 reaches a certain level to ensure safe functioning. As described, the brake 200 of the aircraft 100 may need to be serviced or replaced if the oxidation threshold is reached. The predetermined thermal oxidation level may be set at a value below the oxidation threshold to inhibit thermal oxidation as the thermal oxidation state of the brake 200 approaches the oxidation threshold (e.g. 4% to 6.5% of the original mass of the brake 200 lost).

In order to compare the temperature characteristic of the brake 200 to the determined brake temperature characteristic criterion and to monitor the temperature characteristic of the brake 200, the first controller 302 may receive information regarding the temperature characteristic of the brake 200 from a temperature sensor 216 associated with the brake 200 (see Figure 2). The temperature sensor 216 may be provided in thermal contact with one of the brake discs. In the example of Figure 2, the temperature sensor 216 is provided on the stator 210. In this example, the stator 210 is the brake disc likely to reach the highest temperatures. The temperature sensor 216 may be any type of temperature sensor suitable for use in an aircraft brake assembly. For example, the temperature sensor 216 is able to function properly at the temperature ranges likely to be reached by the brake discs 202. For example, the temperature sensor 216 may be a thermocouple, a surface acoustic wave (SAW) sensor, an eddy current sensor, a resistance thermal sensor, a strain gauge, or the like. The first controller 302 may receive brake temperature measurements from the temperature sensor 216 via a wired or wireless communication link. If a temperature sensor is provided on a part of the brake 200 other than on one of the brake discs 202, the temperature of the brake discs 202 may be determined using an indication of the relationship between a temperature measured by said temperature sensor and the temperature of the brake discs 202. In some examples, the indication of the relationship may be determined by experiment. In some examples, the indication of the relationship may be determined using a brake thermal model.

The first controller 302 may receive brake temperature measurements from the temperature sensor 216 in real-time. The first controller 302 may continuously receive brake temperature measurements, or alternatively may periodically receive discrete items of brake temperature information. In some examples, the controller 302 may request brake temperature measurements from the temperature sensor 216 and receive brake temperature measurements in response. A rate of increase of temperature of the brake 200 may be determined based on at least two measurements of the temperature at different times.

The first controller 302 may receive a predicted temperature characteristic from a brake temperature prediction function as the temperature characteristic of the brake 200. The brake temperature prediction function may predict the temperature of the brake 200 based on the energy input into the brake 200 during a braking event. A braking event is, for example, an event comprising one or more applications of the brake 200. Using the energy input into the brake 200, the mass of the brake 200 and the specific heat capacity of the brake 200, a change in temperature of the brake 200 caused by the input energy can be determined. The temperature of the brake 200 may then be determined using the temperature change, i.e. by adding it to an initial temperature of the brake 200. The initial temperature before the braking event may be known from previous iterations of such a calculation. On the other hand, if the energy input is due the first brake application of the day (i.e. the brake 200 has not been applied for a significant amount of time), the initial temperature may be taken to be the environmental temperature.

In some examples, the brake thermal model (e.g. a computational fluid dynamics model) may be used to predict a temperature of the brake 200 given an amount of energy input into the brake 200. For example, the physical properties of the brake 200 (e.g. mass, heat capacity, etc.), environmental characteristics and the energy input into the brake 200 may be input into the brake thermal model, and the brake thermal model may output a predicted temperature of the brake 200. The environmental characteristics may include ambient temperature (e.g. in the vicinity of the brake 200), wind conditions, or other characteristics which may affect the temperature of the brake 200. The environmental characteristics may be measured by instruments included in instruments 108, for example.

In some examples, the rate of increase of temperature of the brake 200 may be predicted based on the energy input into the brake 200 by the brake temperature prediction function. For example, the rate of increase may be predicted based on the energy input into the brake and the physical properties of the brake 200 using the brake thermal model.

As described, the thermal oxidation state of the brake 200 is related to the amount of mass of the brake 200 lost due to thermal oxidation which may be taken into account when determining the mass of the brake 200. The mass lost due to wear of the brake discs 202 may also be taken into account. For example, the instruments 108 may comprise a brake wear sensor associated with the brake 200. The brake wear sensor may provide an indication of a reduction in length L of the brake discs 202. Using the reduction in length L due to wear, a reduction in the mass of the brake 200 due to wear may be determined. In some examples, the mass of the brake 200 may be determined by subtracting the amount of mass lost due to thermal oxidation and the amount of mass lost due to brake wear from the initial mass of the brake 200 (e.g. as specified by the brake manufacturer or measured at installation of the brake 200 into aircraft 100).

The energy input into the brake 200 may be determined using measurements from instruments included in instruments 108. The instruments 108 may include a torque sensor for measuring the torque reacted by the brake 200 and a tachometer for measuring the rotational speed of the wheel 104. In such examples, the energy input into the brake 200 is calculated by integrating the product of the wheel speed and torque over time.

The first controller 302 may receive a predicted temperature if, for example, the temperature sensor 216 malfunctions or the first controller 302 is not able to receive brake temperature measurements from the temperature sensor 216. In some examples, a processor (e.g. a processor of the computing system 106) may determine whether to provide the first controller 302 with a brake temperature measurement from the temperature sensor 216 or a predicted temperature from the brake temperature prediction function. In some examples, the first controller 32 may receive a brake temperature measurement from the temperature sensor 216 and a predicted temperature from the brake temperature prediction function, and determine which temperature value to use. For example, if there is a large discrepancy in the two values, the temperature value closest to what might be expected given the mass, speed, etc. of the aircraft 100 may be used.

During use of the aircraft 100, there may be instances where it is not desirable to have one or more of the brakes of the aircraft 100 disabled. For example, it may be desired that all the brakes are used during landing to reduce the speed of the aircraft 100. The second controller 304 may be configured to disable a brake if a taxiing criterion is met. In such examples, brake 200 may only be disabled responsive to the second controller 304 receiving the first indication during a taxiing phase as defined by the taxiing criterion.

The taxiing criterion may comprise one or more of an aircraft speed threshold and a particular flight phase of the aircraft 100. The aircraft speed threshold may be defined such that an aircraft speed less than or equal to the aircraft speed threshold satisfies the taxiing criterion. For example, the aircraft speed threshold may be 30 knots. In such examples, the second controller 304 does not disable the brake 200 upon receiving the first indication if the speed of the aircraft is above 30 knots. This is because, at higher speeds a greater braking force may be required to reduce the speed of the aircraft 100 within a certain time or distance. The second controller may receive information relating to the aircraft speed from an on-board instrument (i.e. an instrument included in instruments 108), or a processor of the computing system 106.

The particular flight phase may be indicated by a flight phase indication system of the aircraft 100. The particular flight phase may be the taxiing phase after landing and/or the taxiing phase before take-off, for example. The flight phase indication system may be implemented at least in part by the computing system 106 of the aircraft 100. In such examples, the second controller 304 does not disable the brake 200 unless the flight phase is indicated to be the taxiing phase after landing and/or the taxiing phase before take-off. By disabling the brake 200 responsive to the first indication only when the aircraft is in a taxiing phase as defined by the taxiing criterion, the brake 200 is made available to provide braking during other phases in which reducing the speed of the aircraft 100 is a higher priority than protecting the brake 200 against thermal oxidation.

As described, the braking system 214 causes the brake 200 to be applied in response to a braking request.

The second controller 304 of the braking system 214 may be configured to receive a braking request when a pilot of the aircraft 100 presses a brake pedal. The braking request may comprise information relating to a requested braking intensity. For example, the braking request may include information about how hard/far the pilot has pressed the brake pedal.

In some cases, a significant amount of braking may be required. For example, the pilot may press the brake pedal hard to bring the aircraft 100 to an immediate stop or to significantly reduce the aircraft speed in a short amount of time. In such cases, it may not be desired to have any of the brakes of the aircraft 100 disabled so that sufficient braking can be provided. The second controller 304 may determine, based on the information related to the requested braking intensity, whether the requested braking intensity exceeds a braking intensity threshold. If the requested braking intensity exceeds the braking intensity threshold, the second controller 304 may enable at least one disabled brake. For example, if the brake 200 has been disabled responsive to the first indication, the second controller 304 may enable the brake 200 in response to the requested braking intensity exceeding the brake intensity threshold.

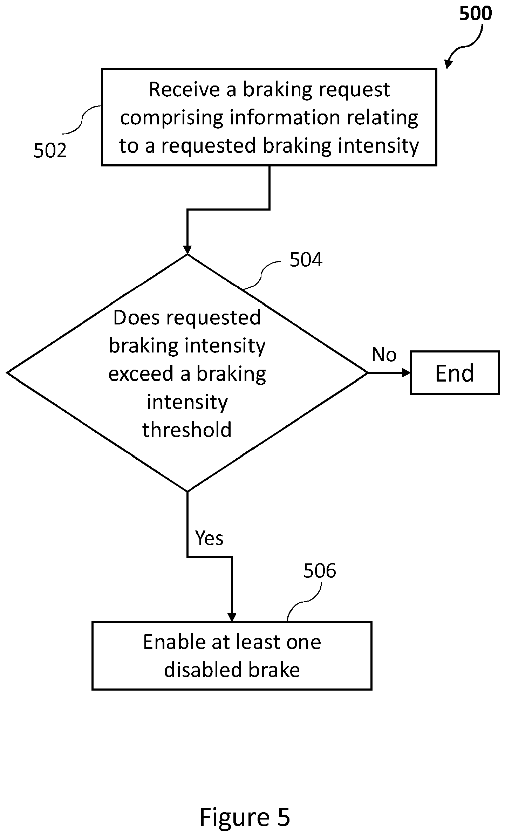

Figure 5 is a flow diagram illustrating a method 500 performed by the second controller 304 of enabling a disabled brake in response to a braking request with high braking intensity. At block 502, a braking request comprising information related to the requested braking intensity is received. For example, as described, the second controller 304 receives the braking request. At block 504, the second controller 304 determines, based on the information related to the requested braking intensity, whether the requested braking intensity exceeds the braking intensity threshold. If the requested braking intensity exceeds the braking intensity threshold, the method 500 proceeds to block 506 and at least one disabled brake is enabled. For example, if the brake 200 has previously been disabled responsive to the first indication, the brake 200 may be enabled by the second controller 304 at block 506. In this manner, depending on the requested braking intensity, the brake 200 may again be enabled to provide braking if relatively high braking intensity is required.

On the other hand, if the requested braking intensity does not exceed the braking intensity threshold, the method 500 ends. The method 500 may be repeated each time a braking request is made so that the requested braking intensity can be provided.

All or part of the described methods may be performed in real-time, during aircraft operation. For example, the described methods may be performed in real-time when the aircraft 100 is in a taxiing phase and/or when a braking event is occurring. For example, the temperature characteristic of the brake 200 may be compared to the brake temperature characteristic criterion repeatedly. For instance, the first controller 302 may repeatedly determine whether the temperature characteristic of the brake 200 satisfies the brake temperature characteristic criterion during a braking event. The second controller 304 may control the brake 200 as described in real-time based on this determination. For example, the second controller 304 may receive an indication each time the brake temperature characteristic criterion is determined to be satisfied or no longer satisfied (i.e. the second control 304 may receive first and second indications, as appropriate, in real-time) and control the brake 200 selectively to be enabled or disables depending on the received indications.

For example, all or part of the described methods may be performed repeatedly at a fast rate, with the temperature of the brake 200 being sampled multiple times per second, up to the sampling rate of the temperature sensor.

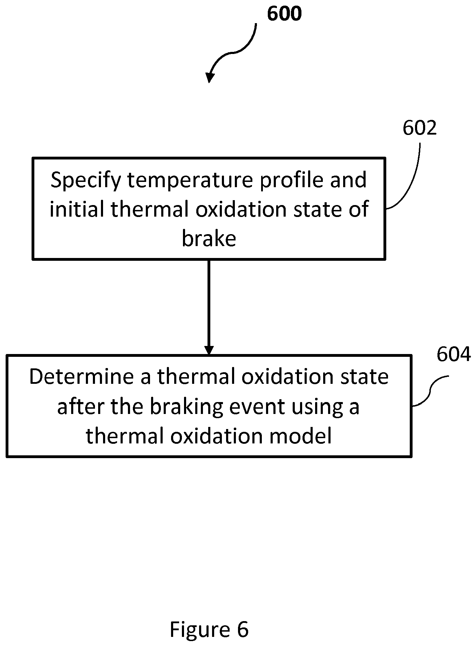

Figure 6 summarizes an exemplary method 600 of determining a thermal oxidation state of a brake, such as the brake assembly 200, of an aircraft landing gear assembly 102. The method 600 involves determining a thermal oxidation state of the brake assembly 200 after a braking event, using a thermal oxidation model based on an initial thermal oxidation state (which may also be referred to as the initial thermal oxidation level) before the braking event and a temperature profile of the brake with respect to time. The determined thermal oxidation state of the brake assembly 200 after the braking event may be referred to as an updated thermal oxidation state. This is because the thermal oxidation state of the brake assembly 200 after the braking event takes account of the change in the initial thermal oxidation state due to the braking event.

The braking event is an event relating to the application of the brake assembly 200. For example, a braking event may comprise one or more applications of the brake assembly 200 to slow or stop the aircraft 100. In some examples, the braking event may be a part of a time during which the brake assembly 200 is continuously being applied. Any time the brake assembly 200 is applied, the temperature of the brake assembly 200 may rise. This is because when brake assembly 200 is applied to reduce the speed of the aircraft 100, some of the kinetic energy of the aircraft 100 is absorbed into the brake assembly 200 as heat causing its temperature to rise. Therefore, whether or not the brake assembly 200 has been applied can be determined based on temperature variations of the brake assembly 200.

At block 602 of the method 600, the temperature profile and the initial thermal oxidation state of the brake assembly 200 are input. As explained above, the temperature profile indicates a variation of temperature with time. The input temperature profile may, for example, relate to a use cycle of the aircraft 100. For example, the temperature profile may be for an entire use cycle of the aircraft 100, e.g. the time from when the aircraft 100 is at a departure gate before a flight to when the aircraft 100 is at an arrival gate after a flight. Specifically, the temperature profile may indicate the variation of temperature over time for all braking events that take place during a cycle. In other examples, the temperature profile may not be for an entire use cycle of the aircraft 100. For example, the temperature profile may be over a single braking event, or a part of a cycle with many braking events. In some examples, a number of temperature profiles belonging to a particular use cycle may be used to determine the thermal oxidation state of the brake assembly 200 after that use cycle.

The temperature profile may, for example, relate to a use cycle that has occurred. In other words, the temperature profile may include actual data from the temperature sensor 216 of the aircraft 100 during a previous use cycle. In such examples, the temperature profile relates to real data. On the other hand, in some examples, the temperature profile may be a predicted temperature profile of a predicted future use cycle of the aircraft 100. In that context, a braking event may be a predicted future braking event.

The initial thermal oxidation state of brake assembly 200 is the thermal oxidation state of the brake assembly 200 before the braking event for which the updated thermal oxidation state is being determined. For example, for a new brake assembly 200 installed in aircraft 100, the initial oxidation state may indicate no oxidation. In some examples, the initial oxidation state for a newly installed brake assembly 200 may be set at installation by aircraft maintenance personnel and may either indicate no oxidation or some oxidation as assessed by the person(s) performing the installation. In examples where the brake assembly 200 is not new, the initial oxidation state may be the oxidation state calculated at a previous instance of method 600 being performed. In some examples, a brake or a brake component which is not new may be installed on aircraft 100. If the temperature profile information for all previous braking events involving that brake or brake component is available, the thermal oxidation state at installation may be determined using the available temperature profile information using method 600, or by other methods disclosed herein.

At block 604 of method 600, a thermal oxidation state after the braking event (updated thermal oxidation state) is determined using a thermal oxidation model. For example, a thermal oxidation model is applied based on the input temperature profile and the initial thermal oxidation state of the brake assembly 200. A thermal oxidation model, for example, indicates how the thermal oxidation state is expected to change with time for various temperatures starting from the initial thermal oxidation state. A thermal oxidation model is a model of the evolution of the thermal oxidation of the brake. Which thermal oxidation model is used may depend, for example, on the initial thermal oxidation state. The details and selection of appropriate thermal oxidation models is described further below. In some examples, the method 600 may be performed live during a use cycle of the aircraft 100. In the case of the method 600 being performed live (i.e. in real time or near real time), the temperature profile used may be from the temperature data acquired thus far by the temperature sensor 216, for example. At block 604, therefore, it is determined how the oxidation state, starting from the initial oxidation state, has changed as a result of the increased temperature associated with the braking event in question.

After the updated thermal oxidation state has been determined, the initial thermal oxidation state may be set to the updated thermal oxidation state. In this way, the initial thermal oxidation state is kept up to date with all previous braking events. In examples where the temperature profile relates to more than one braking event, the method 600 may be performed again in order to determine an updated thermal oxidation state after a subsequent braking event. Updating the initial thermal oxidation state in this manner may ensure that the initial thermal oxidation state being used for a subsequent braking event accounts for all the previous braking events.

In examples where the temperature profile for an entire use cycle of the aircraft 100, the method 600 may be performed to determine respective updated thermal oxidation states after each braking event within that use cycle. It will be understood that this process may be carried out sequentially in relation to the chronology of the braking events. This is so that the determination of the updated thermal oxidation state for each of the braking events is done from a starting point (an initial thermal oxidation state) which takes account of all previous braking events.

In the method 600, the updated thermal oxidation state after a braking event may, for example, be determined based on a high temperature interval, the initial thermal oxidation state and a thermal oxidation rate parameter, using an appropriate thermal oxidation model.

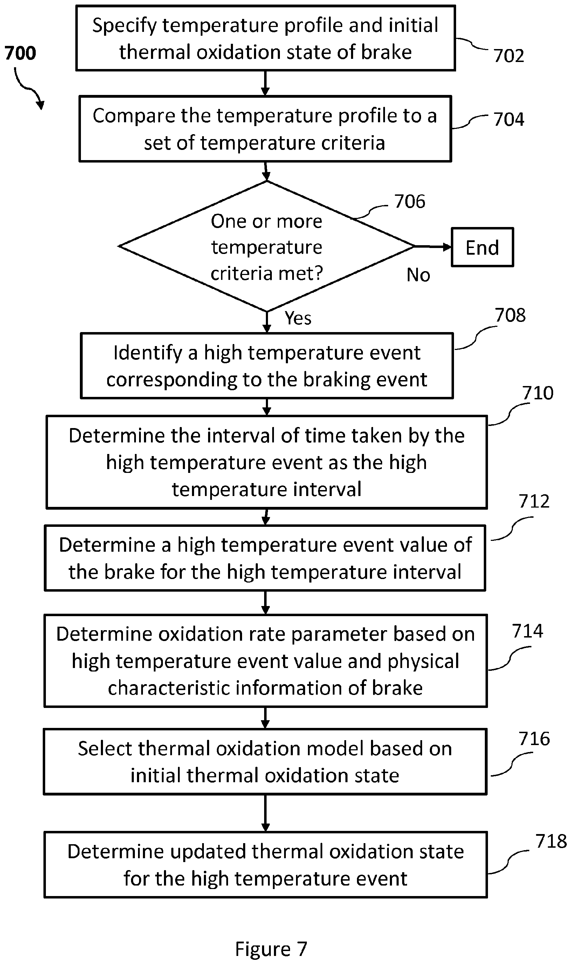

Figure 7 is a flow diagram of a method 700 showing acts that may be performed as part of method 600. For example, the method 700 involves more specific examples of the block 604 of the method 600. Block 702 is identical to block 602 of the method 600, in that a temperature profile of the brake with respect to time and the initial thermal oxidation state of the brake assembly 200 are input. At block 704, the temperature profile is compared to a set of temperature criteria. The set of temperature criteria may include a set of temperature thresholds. For example, the set of temperature criteria may include a first temperature threshold of 400°C and a second temperature threshold of 750°C. In other examples, different temperature thresholds may be used depending on the physical properties of the brake assembly 200. The comparison of the temperature profile may, for example, take place sequentially in time order of the temperature data contained in the temperature profile. For example, a temperature value may be compared to the set of temperature thresholds, and subsequently, the next temperature value in time may be compared to the set of temperature thresholds.

At block 706, it is determined if one or more of the temperature criteria are met. If, for example, none of the temperature thresholds are exceeded, the method 700 ends. It will be appreciated that thermal oxidation of the CC composite of the brake discs 202 is a process that is most significant at high temperatures. A comparison of the temperature profile with the set of temperature thresholds therefore identifies high temperature events corresponding to braking events that may result in thermal oxidation. As mentioned above, a braking event is, for example, an application of the brake assembly 200. However, a high temperature event is an event during which the temperature of the brake assembly exceeds at least one of the temperature thresholds as a result of a braking event. For example, if during a braking event (i.e. a braking application) the temperature of the brake assembly 200 remains below all temperature thresholds, then no high temperature events occurred during that braking event. On the other hand, if during a braking event the temperature of the brake assembly exceeds a temperature threshold, the part of the braking event for which that temperature threshold is exceeded may be referred to as a high temperature event. If more than one temperature threshold is exceeded, a high temperature event may be the part of the braking event for which the highest temperature threshold is exceeded.

The temperature thresholds may be set based on temperatures above which a significant amount of thermal oxidation is expected to occur. Therefore, the method 700 ends if none of the temperature thresholds are exceeded. This is because, in this example, no braking events causing a sufficiently high temperature for thermal oxidation have occurred. In such examples, the updated thermal oxidation state after the braking event may simply be set to the initial thermal oxidation state before the braking event in question.

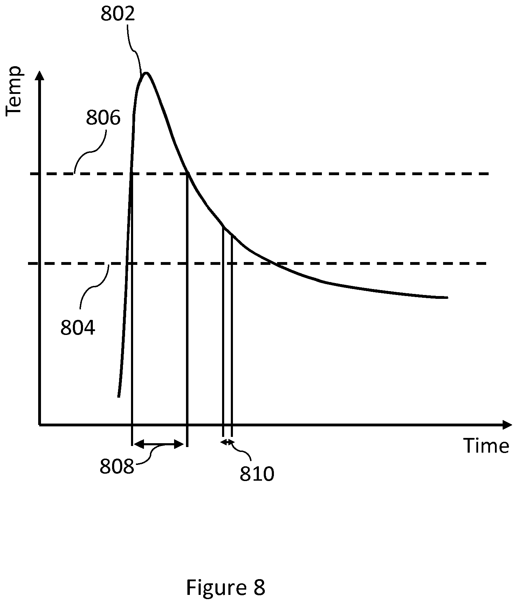

On the other hand, if at least one of the temperature thresholds is exceeded, at block 708 of the method 700, a high temperature event corresponding to the braking event in question is identified. A high temperature event corresponds to the part of the temperature profile which is above the highest of the exceeded temperature thresholds. This is because the part of the temperature profile which is above the highest of the exceeded thresholds corresponds to the part of the braking event for which the highest temperature threshold is exceeded. The identification of a high temperature event is described with reference to Figure 8. Figure 8 is a graph illustrating a part of an example temperature profile. In the graph of Figure 8, the vertical axis represents temperature of the brake assembly 200, and the horizontal axis represents time. In this example, profile part 802 indicates that the temperature of the brake assembly 200 exceeds a first temperature threshold 804 and a second temperature threshold 806. In this example, the high temperature event is identified as the part of the profile 802 above the second temperature threshold 806 as the second temperature threshold 806 is the highest temperature threshold which is exceeded.

The amount of thermal oxidation which occurs above the second temperature threshold 806 may be significantly greater for a given interval of time compared to the thermal oxidation above the first temperature threshold 804 but below the second temperature threshold 806. Therefore, in this example, the parts of the temperature profile below the second temperature threshold 806 are not taken into account. In other examples, for example when the method 700 is used for live oxidation state monitoring as described further below, the parts of the temperature profile between the two temperature thresholds may be taken into account. It should be appreciated that the graph of Figure 8 is merely an illustration of an example for explanatory purposes.

At block 710, the interval of time taken by the high temperature event is determined to be the high temperature interval. As mentioned above, the updated thermal oxidation state may be determined based on (among other factors) the high temperature interval. In the example of Figure 8, the high temperature interval is determined to be the time interval 808.

At block 712, a high temperature event value of the brake assembly 200 is determined for the high temperature interval. The high temperature event value is a value of temperature ascribed to the high temperature event. In some examples, the high temperature event value is the average temperature during the high temperature interval. Alternatives to the high temperature event value being the average temperature are described below in the context of live oxidation monitoring.

At block 714, an oxidation rate parameter is calculated based on the high temperature event value and physical characteristic information of the brake. For example, the oxidation rate parameter for the thermal oxidation reaction may be determined based on the Arrhenius equation shown as Equation 1 below:

$$k(T) = Ae^{-E_A/RT} \tag{1}$$

In Equation 1, $k(T)$ is the thermal oxidation rate, $A$ is a pre-exponential constant, $E_A$ is the activation energy of the carbon atoms of the CC composite components of brake assembly 200, $R$ is the universal gas constant and $T$ is the temperature. In this example, for a particular high temperature event, the temperature $T$ in Equation 1 is set to the high temperature event value for the purpose of block 714. In this example, the thermal oxidation rate $k(T)$ is the oxidation parameter determined at block 714. The values of activation energy $E_A$, and the pre-exponential constant $A$ may depend on the physical properties of the CC composite components of brake assembly 200 (in this example, the brake discs 202). For example, the values of these parameters may depend on the density, porosity, manufacturing process, contaminants present in the CC composite structures, the surface finish of the components and surface coatings of the brake assembly 200. The values of the activation energy $E_A$, and the pre-exponential constant $A$ may also vary depending on the high temperature event value and the initial thermal oxidation state. Therefore, in order to determine the oxidation parameter, appropriate values of activation energy $E_A$, and the pre-exponential constant $A$ may be selected based on the physical properties of the brake assembly 200, the high temperature event value and the initial thermal oxidation state before the braking event in question.

For example, the activation energy $E_A$ may be related inversely to temperature. The activation energy $E_A$ may become lower at a temperature at which oxygen molecules are able to penetrate past the surface of the brake discs 202 and oxidation of carbon deeper in the brake discs 202 can take place. The appropriate values of activation energy $E_A$, and the pre-exponential constant $A$ may, for example, be determined experimentally for different initial thermal oxidation amounts, temperatures and physical properties of the brake being considered before the method 700 is implemented.

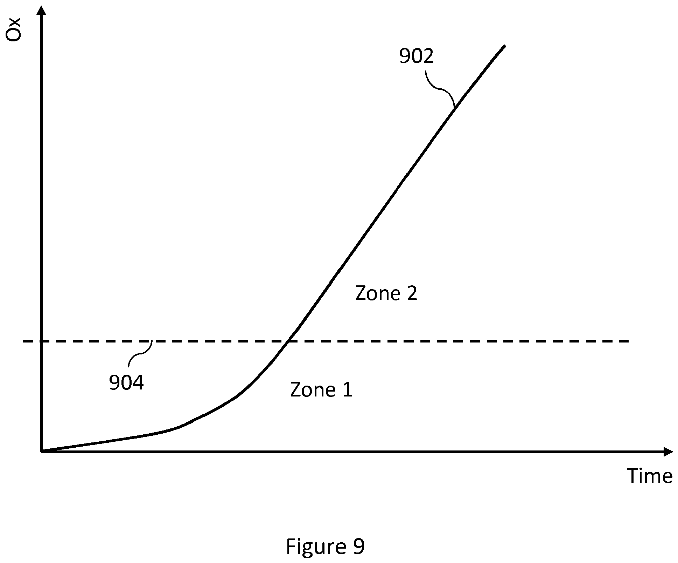

Figure 9 is a graph of an example of the evolution with time of thermal oxidation of the brake discs of a brake assembly 200 for a specific temperature. The vertical axis of the graph in Figure 9 represents a measure of the thermal oxidation indicated by the thermal oxidation state Ox. For example, the thermal oxidation state Ox may be the proportion of mass of the brake assembly 200 lost due to thermal oxidation of the brake discs 202. The evolution curve 902 shows how the proportion of mass lost due to thermal oxidation advances with time at the specific temperature. It should be noted that a different evolution curve would indicate the variation of the thermal oxidation state Ox over time for a different temperature value.

In this example, the thermal oxidation state Ox advances with time differently below a thermal oxidation state level 904, than it does above the thermal oxidation state level 904. The thermal oxidation state Ox (i.e. mass lost due to thermal oxidation) is shown to increase non-linearly with time below oxidation state level 904 and substantially linearly with time above oxidation state level 904, in this example. In this example, the thermal oxidation state increases at an accelerated rate with time until thermal oxidation state level 904 is reached. After thermal oxidation state level 904 is reached, the rate of change of thermal oxidation state Ox with time remains generally constant. The part of the graph of Figure 9 below thermal oxidation state level 904 may be considered as a first thermal oxidation zone, namely Zone 1, and the part of the graph of Figure 9 above thermal oxidation state level 904 may be considered as a second thermal oxidation zone, namely Zone 2, for example.

In some examples, different values of the activation energy $E_A$, and the pre-exponential constant $A$ may be used depending on which thermal oxidation zone the brake assembly 200 is in as indicated by the initial thermal oxidation state.

At block 716, a thermal oxidation model is selected based on the initial thermal oxidation state before the braking event. The thermal oxidation model describes the evolution of the thermal oxidation state Ox of the brake assembly 200 for different values of temperature. A thermal oxidation model which describes the evolution of the thermal oxidation state Ox in Zone 1 may be selected when the initial thermal oxidation state is in Zone 1. A thermal oxidation model which describes the evolution of the thermal oxidation state Ox in Zone 2 may be selected when the initial thermal oxidation state is in Zone 2. For example, a first thermal oxidation model, Model 1, may be selected for Zone 1, and a second thermal oxidation model, Model 2, may be selected for Zone 2. Model 1 for Zone 1, describing the non-linear change of thermal oxidation state Ox with time, may be represented by Equation 2. Model 2 for Zone 2, describing the linear change of thermal oxidation state Ox with time, may be represented by Equation 3 below.

$$\mathrm{Ox} = 1 - \left[ 1 - \left\{ k(T) \times t_{eq}(1-n) \right\}^{1/1-n} \right] \tag{2}$$

$$\mathrm{Ox} = k(T) \times t_{eq} \tag{3}$$

In Equation 2 and Equation 3 above, $k(T)$ is the thermal oxidation rate as defined by Equation 1. The parameter $t_{eq}$ is the equivalent time, which is the time it would take, at temperature T, to reach the thermal oxidation state Ox. The parameter $n$ is referred to as the equation order and depends on the properties of the CC composite used in the brake assembly 200. The parameter $n$ may, for example be experimentally determined for a brake using a particular CC composite.

In some examples, different thermal oxidation models to those described by Equations 2 and 3 may be used. In some examples, a single thermal oxidation model may be used which describes the evolution of the thermal oxidation state Ox for all thermal oxidation states Ox that are relevant to the brake assembly 200. In some examples, more than two thermal oxidation models may be used for respective ranges of thermal oxidation states Ox. The method 700 may be modified appropriately in order to use such alternative thermal oxidation models. For example, a different set of inputs may be applied to the thermal oxidation model, as appropriate, than are described in this specific example of the method 700.

It will be understood that block 716 may be performed at any stage of the method 700 once block 702 has been performed, because block 716 requires the initial thermal oxidation state.

At block 718, the updated thermal oxidation state for the high temperature event is determined using the selected thermal oxidation model based on the high temperature interval, the initial thermal oxidation state and the determined thermal oxidation rate parameter. For example, the time it would take to reach the initial thermal oxidation state from zero at the high temperature value is determined and the high temperature interval is added to this time in order to determine the value of $t_{eq}$ to be used in the selected thermal oxidation model. Inputting the thus determined value of $t_{eq}$, as well as the thermal oxidation parameter into the equation selected from Equations 2 and 3 above results in, as an output, the updated thermal oxidation state of the brake assembly 200 after the high temperature event.

The updated thermal oxidation state may be set to the new initial thermal oxidation state for a subsequent use of the method 700 for a subsequent high temperature event in the temperature profile.

In some examples, the method 600 and/or 700 may be performed live during a use cycle when braking events are taking place. In such examples, part of the method 700, for example, may be modified to allow live brake oxidation monitoring, and the temperature profile may correspond to temperature values being measured live. For example, temperature information which the temperature sensor 216 provides may continuously be compared to the set of temperature criteria as per block 704 of method 700, and high temperature events may be identified substantially as they occur. It will be understood that even though this kind of oxidation state monitoring is described as live, the extent to which it occurs in real time will depend on various hardware and software (e.g. processing speed) limitations. For example, there may be a time delay between temperature values corresponding to a high temperature event being measured by the temperature sensor 216, and those values resulting ultimately in updated thermal oxidation states of the brake assembly 200.

For example, high temperature events may be identified as smaller parts of the temperature profile than in the example described above. Referring again to Figure 8, the part of the profile part 802 occurring within the time interval indicated as 810 may be taken to be a high temperature event and the interval 810 as its high temperature interval. In this example, the high temperature event value may be taken to be the temperature measured at the beginning or the end of the high temperature interval 810, for example, or the average of the two temperature values. Unlike the above example, in the case of live monitoring, parts of the temperature profile between the first and second temperature thresholds may be taken into account even when the temperature exceeds the second temperature threshold 806. In the case of live monitoring, any part of the temperature profile above at least one temperature threshold, such as the part identified by interval 810, may be identified as a high temperature event. It will be understood that such modifications may allow the thermal oxidation state of the brake assembly 200 to be updated as high temperature events corresponding to braking events are taking place. In some examples, high temperature events may be identified based on the time between subsequent temperature measurements taken by the temperature sensor 216. For example, the interval 810 may be the interval of time between subsequent temperature measurements taken by the temperature sensor 216.

The methods 600 and 700 may be used in order to determine the thermal oxidation state of the brake assembly 200 after an actual use cycle of the aircraft 100 or in a live manner during an actual use cycle. In such examples, this may be done based on one or more temperature profiles encompassing braking events within that use cycle. As mentioned above, in some examples, the thermal oxidation state of the brake assembly 200 is determined in respect of a use cycle which has actually occurred using temperature profile information collected by the temperature sensor 216.

On the other hand, in some examples, the method 600 or 700 may be used to predict a future thermal oxidation state of the brake assembly 200 after a first plurality of predicted future use cycles of the aircraft 100. The first plurality of future use cycles may be a number of cycles after which a thermal oxidation threshold is reached. Each predicted future use cycle may include a respective plurality of braking events. For each predicted future use cycle, the predictions may be based on a respective predicted temperature profile of the brake assembly 200 and a current thermal oxidation state. The current thermal oxidation state is, for example, the oxidation state taking into account all the previous braking events experienced by the brake assembly 200.

For example, the predicted temperature profiles may be input into the method 600 or 700, for example in time order, to determine the future thermal oxidation state of brake assembly 200. The predicted temperature profile of a predicted future use cycle may be predicted based on previous temperature profiles for previous actual use cycles of the aircraft 100. For example, using the parts of previous temperature profiles relating to the landing phase, landing phase parts of the temperature profile for a future use cycle may be predicted. For the purpose of predicting a future thermal oxidation state, high temperature intervals, high temperature event values, etc. may be stored in a computer readable storage medium when the method 600 or 700 is being carried out for actual use cycles of aircraft 100.

In some examples, data from previous cycles may not be available, for example, because brake the assembly 200 may be new. In some examples, enough data may not be available to reliably predict temperature profiles for predicted future use cycles. In such examples, predetermined temperature profiles may be used. The predetermined temperature profiles may be profiles typically expected for the future use cycle of aircraft 100.

The predicted temperature profiles may, for example, take into account the future flight schedule of the aircraft 100. For example, the aircraft 100 may be expected to land at an airport with a short runway requiring high energy (i.e. high temperature) braking upon landing for some of its predicted future use cycles. For those predicted future use cycles, the predicted temperature profiles may indicate high energy braking upon landing. It will be appreciated that various other factors may be taken into account when predicting temperature profiles such as taxiing time at various phases of a predicted future use cycle, waiting time between a taxiing phase and the preceding landing phase, and the like.

As mentioned above, the first plurality of predicted future use cycles may be a number of predicted future cycles after which the predicted future thermal oxidation state reaches a thermal oxidation threshold. For example, the prediction of the future thermal oxidation state may stop after a cycle in which the thermal oxidation threshold is reached. In some examples, the prediction of the future thermal oxidation state may stop as soon as the thermal oxidation threshold is reached. The thermal oxidation threshold may be an oxidation state at which servicing or replacement of the brake assembly 200 or a component of the brake assembly 200 is required. For example, the brake assembly 200 may require a service if its mass is reduced by between 4% and 6.5%, for instance 5.7%, where the selected percentage threshold may vary depending, for instance, on the original, manufactured disc density. In this example, the first plurality of predicted future use cycles is the number of cycles it takes for the proportion of mass lost due to thermal oxidation to reach or exceed, for instance, 5.7% (i.e. being within the range 4% to 6.5%).

On the other hand, in some examples, the prediction of the future thermal oxidation state may stop at the end of a predicted future use cycle during which the future thermal oxidation state approaches close to the thermal oxidation threshold such that the future thermal oxidation state can be expected to reach the thermal oxidation threshold during the next predicted future use cycle. In such examples, the thermal oxidation threshold may be considered reached within the first plurality of predicted future use cycles. This is because, in reality, an aircraft 100 with a brake assembly 200 expected to reach the thermal oxidation threshold in a strict sense in the very next cycle would not be permitted to fly and a service or replacement relating to the brake assembly 200 may take place at that point.

Using the first plurality of predicted future use cycles, an indication may be given as to how many use cycles can take place before the brake assembly 200 or a component of the brake assembly 200 requires servicing or replacement due to thermal oxidation. In the examples where the thermal oxidation threshold is strictly reached or exceeded during the last of the first plurality of future cycles, the number of cycles before a service or replacement is required due to thermal oxidation may be predicted as one fewer than the number of cycles in the first plurality. In examples where the prediction of the future thermal oxidation state stops when the thermal oxidation threshold is expected to be reached in the next cycle after the first plurality, the first plurality is taken as the number of cycles before a service or replacement due to thermal oxidation is required.

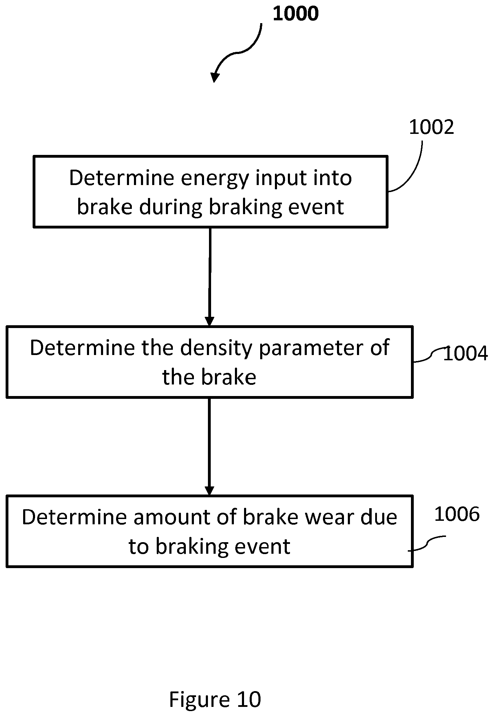

Figure 10 is a flow diagram of a method 1000 of determining an amount of brake wear caused by a braking event, using a brake wear model based on an amount of energy absorbed by the brake assembly 200 due to the braking event and a density parameter of the brake assembly 200. The amount of brake wear may be determined for all braking events where energy is input into the brake assembly 200 in a process involving friction that would cause a surface of the brake discs to wear. For example, wear of the brake discs due to friction may cause the length of the brake discs 202 (length L as shown in Figure 2) to decrease as brake disk material is lost by the action of friction.

For example, the amount of brake wear may be determined for those braking events which do not involve any high temperature events. For the method 1000, a braking event may, for example, be identified based on the temperature profile as an event where the temperature of the brake assembly 200 increases. In some examples, a braking event may simply be identified based on an indication that brake assembly 200 has been applied. For example, the computing system 106 of the aircraft 100 may detect when brake assembly 200 is applied and released.

At block 1002 of the method 1000, the energy input into the brake assembly 200 during the braking event is determined. The energy input into the brake assembly 200 may, for example, be determined based on the characteristics of the aircraft 100 during the braking event, such as a mass of the aircraft 100, the velocity of the aircraft 100 during the braking event, etc. The energy absorbed by the brake assembly 200 can be calculated based on such characteristics of the aircraft 100 by determining the kinetic energy of the aircraft 100. For example, a given proportion of the kinetic energy of the aircraft 100 may be absorbed by the brake assembly 200 to reduce the kinetic energy of the aircraft 100. In some examples, the energy input into the brake assembly 200 may be determined based on measurements acquired by the instruments 108 of the aircraft 100. For example, the instruments 108 may include a tachometer associated with the wheel 104 to which the brake assembly 200 is associated. In such examples, the tachometer measures the rotational speed of the wheel 104, and the energy absorbed by the brake assembly 200 can be determined using the change of the rotational speed with respect to time.

In other examples, if the mass of the brake assembly 200 is known, the energy absorbed may be determined based on the increase in temperature of the brake assembly 200 taking into account the specific heat of the brake assembly 200. In some examples, the mass of the brake assembly 200 may be determined based on the thermal oxidation state of the brake assembly 200 determined according to the above described methods, because, as described above, the thermal oxidation state may be expressed as an amount of mass lost from brake assembly 200 due to thermal oxidation.

At block 1004 of the method 1000, a density parameter of the brake assembly 200 is determined. The density parameter, for example, is a parameter indicating the decrease in density of the brake assembly 200 compared with the original density, taking into account lost mass. The density of the brake assembly 200 may decrease, for example, due to thermal oxidation. It will be understood that thermal oxidation causes a reduction in mass because carbon atoms react with oxygen to form carbon dioxide or carbon monoxide and are thus removed from brake discs 202. However, thermal oxidation may not necessarily change the volume of the brake discs 202. This is because thermal oxidation may not act uniformly on a particular surface of a brake disc and may take place up to a certain depth inside the brake disc.

The density parameter may be expressed as (1-Ox) where the thermal oxidation state Ox is expressed as a number between zero and one. For example, the density of the brake assembly 200 is reduced by a factor (1-Ox) compared to the initial density before any thermal oxidation took place (i.e. when the brake assembly 200 was new). Therefore, the density parameter may be determined based on the initial oxidation state before the braking event.

In some examples, the reduced density of the brake assembly 200 may be determined based on measurements by instruments included in the instruments 108. For example, the mass of the brake assembly 200 may be calculated based on an amount of energy absorbed by the brake assembly 200 (based on measurements from a tachometer, for example) and the consequent increase in its temperature (based on measurements from temperature sensor 216, for example). The reduced density of the brake assembly 200 may be determined based on the calculated mass of the brake assembly 200. The aircraft 100 may include a wear pin associated with brake assembly 200. Typically, a wear pin provides an indication of the reduction in length L of a brake and therefore an indication of the brake wear. The wear pin may be checked between cycles by ground crew, for example, and an updated volume value of the brake assembly 200 acquired. In some examples, there may be other ways to measure the change in length L of the brake assembly 200. For example, a length sensor may be provided for the brake assembly 200, and/or electrically actuated brakes may be used. An updated volume value may be determined, based on reduced length L, and used to determine the reduced density from the mass. During a single cycle, the change in volume of brake assembly 200 may be insignificant for the purpose of calculating the density parameter, and an updated volume may be acquired after a number of cycles. From the reduced density, the density parameter may be determined.

At block 1006 of the method 1000, an amount of brake wear caused by the braking event is determined, using a brake wear model based on the energy absorbed by the brake assembly 200 and the density parameter from block 1004. For example, the mass of the brake assembly 200 lost due to wear during the wear event is determined using the brake wear model of Equation 4 below.

$$m_{wear} = \frac{W + X \times E_{brake} + Y \times E_{brake}^2 + Z \times E_{brake}^3}{(1 - Ox)} \qquad (4)$$

In Equation 4 above, $m_{wear}$ is the mass lost due to wear during the braking event, $E_{brake}$ is the energy absorbed by the brake assembly 200, and $W$, $X$, $Y$ and $Z$ are constants. The constants $W$, $X$, $Y$ and $Z$ may, for example, be determined by experiment beforehand, and may vary depending on the properties of the brake assembly 200. The brake wear amount for a braking event may be determined as a reduction in length L of the brake assembly 200 based on the reduction of mass due to brake wear during that braking event.

As mentioned above, the initial thermal oxidation rate is used to determine the density parameter in some examples. In these examples, when a braking event takes place during which a high temperature event also occurs, the initial thermal oxidation state may be used for the determination of block 1006. This is because brake wear occurs on a much shorter timescale than thermal oxidation.

The amount of brake wear determined for a braking event may be added to the amount of brake wear from all previous braking events of the brake assembly 200 in order to determine the total brake wear amount.

The method 1000 may, for example, be performed live during a time when braking events are taking place, or for a use cycle which has already occurred using the relevant data from that use cycle. The method 1000 may also be used in order to predict a future brake wear amount for the brake assembly 200 after a second plurality of predicted future use cycles of the aircraft 100. The second plurality of predicted future use cycles may be a number of cycles after which a brake wear threshold is reached. Each predicted future use cycle may include a respective plurality of braking events. For example, the method 1000 may be performed for each braking event in the second plurality of predicted future use cycles. The wear amount from each of those braking events may be added up to predict the future brake wear amount for the second plurality of predicted future use cycles. For each predicted future use cycle, the predictions may be based on predicted amounts of energy absorbed by the brake during respective braking events, and respective predicted density parameters of the brake for respective braking events.. For example, braking events may be identified and energy absorbed by brake assembly 200 for those braking events determined based on the predicted temperature profiles. In other examples, predicted amounts of absorbed energy may be based on data from previous cycles. If the brake assembly 200 is new, or enough previous data is not available, the predicted amounts of energy may be predetermined.

For the purpose of predicting the future brake wear amount, the method 1000 may be used in combination with the method 600 or 700. In these examples, the up to date initial thermal oxidation state just before each predicted braking event (e.g. a predicted future braking event) is known. In this way, the mass of the brake assembly 200, and therefore the density parameter, may be determined using the initial thermal oxidation before the future braking event in question.

As mentioned above, the second plurality of predicted future use cycles may be a number of predicted future cycles after which the predicted future brake wear amount reaches a brake wear threshold. For example, the prediction of the future brake wear amount may stop after a cycle in which the brake wear threshold is reached. In some examples, the prediction of the future brake wear amount may stop as soon as the total brake wear amount reaches the brake wear threshold. The brake wear threshold may be a total amount of brake wear at which servicing or replacement of the brake assembly 200 or a component of the brake assembly 200 is required. For example, a brake assembly such as the brake assembly 200 of Figure 2 may require a service if its length L has been reduced by, say, 22% to 24%, depending, for example, on the kind of discs and original, manufactured density thereof. For an exemplary disk having an original length L of around 221mm, a reduction in length of around 50mm may trigger servicing or replacement. In this example, the second plurality of predicted future use cycles is the number of cycles it takes for the total brake wear amount to reach or exceed, for instance 50mm (again, for an original disc having a length L of around 221mm).

On the other hand, in some examples, the prediction of the future brake wear amount may stop at the end of a predicted future use cycle during which the total brake wear amount approaches close to the brake wear threshold such that the total brake wear amount can be expected to reach the brake wear threshold during the next predicted future use cycle. In such examples, the brake wear threshold may be considered reached within the second plurality of predicted future use cycles. This is because, in reality, an aircraft 100 with the brake assembly 200 expected to reach the brake wear threshold in a strict sense in the very next cycle would not be permitted to fly and a service or replacement relating to the brake assembly 200 may take place at that point.

Using the second plurality of predicted future use cycles, an indication may be given as to how many use cycles can take place before the brake assembly 200 or a component of the brake assembly 200 requires servicing or replacement due to brake wear. In the examples where the brake wear threshold is strictly reached or exceeded during the last of the second plurality of future cycles, the number of cycles before a service or replacement is required due to brake wear may be predicted as one less than the number of cycles in the second plurality. In examples where the prediction of the future brake wear amount stops when the brake wear threshold is expected to be reached in the next cycle after the second plurality, the second plurality is taken as the number of cycles before a service or replacement due to brake wear is required.

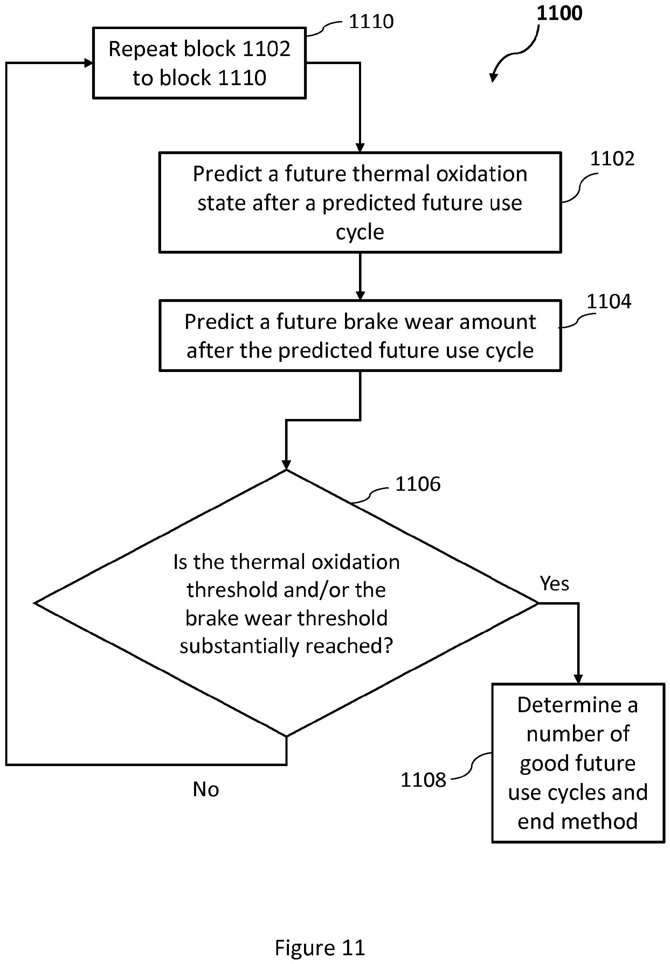

Figure 11 is a flow diagram of a method 1100 for determining a number of good future use cycles until one of the thermal oxidation threshold and the brake wear threshold is reached. The number of good future use cycles is the remaining number of future use cycles before one of the thermal oxidation threshold or the brake wear threshold is reached. The method 1100 may be performed for a number of predicted future use cycles until the first of the thresholds is reached. The method 1100 involves predicting a future thermal oxidation state and a future brake wear amount after a predicted future use cycle and, if one of the thermal oxidation threshold and the brake wear threshold is reached, determining a number of good future use cycles before either of the thresholds is reached. If one of the thresholds is not reached, the predictions are performed for the next predicted future use cycle. As in the above examples, each predicted future use cycle includes a plurality of braking event. For each predicted future use cycle the predictions are based on a respective predicted temperature profile of the brake, a current thermal oxidation state, predicted amounts of energy absorbed by the brake during respective braking events, and respective predicted density parameters of the brake for respective braking events.

The number of good future use cycles is a number of cycles after which servicing or replacement of the brake assembly 200 or a component of the brake assembly 200 is required. It will be appreciated that service or replacement in relation to the brake assembly 200 may be carried out when one of the thermal oxidation threshold or the brake wear threshold is first reached. Which threshold is reached first may, for example, depend on the way the aircraft 100 is handled during use and its flight schedule. For example, if the aircraft 100's schedule involves flying to mostly airports with long runways, short taxiing routes, etc., the brake wear threshold may be reached first. This is because, in such examples, the temperature of the brake assembly 200 may not often exceed any of the temperature thresholds relating to thermal oxidation. On the other hand, the aircraft 100 may often experience high energy braking (e.g. due to short runways) causing temperatures above the thresholds related to thermal oxidation. In such examples the thermal oxidation threshold may be reached first.

At block 1102 of the method 1100, a future thermal oxidation state after a predicted future use cycle is predicted. The prediction of the future thermal oxidation state is performed as described above, for example, using an appropriate thermal oxidation model based on a predicted temperature profile of the predicted future use cycle in question. At block 1104 of the method 1100, a future brake wear amount after the same predicted future use cycle is predicted. The prediction is performed as described above in the context of method 1000.

At block 1106 of the method 1100, it is determined whether the thermal oxidation threshold and/or the brake wear threshold is reached. For example, if the thermal oxidation threshold is reached, the method 1100 proceeds to block 1108 at which a number of good future use cycles, before either of the thermal oxidation threshold or the brake wear threshold is reached, is determined, and the method 1100 ends. For example, if the thermal oxidation threshold is strictly reached or exceeded after a given number of predicted future use cycles, the number of good future use cycles is one less than that given number. For example, if the thermal oxidation threshold is expected to be reached in the very next predicted future use cycle, the number of good future use cycles is determined as the number of predicted future use cycles for which the method 1100 has been performed thus far.

On the other hand, if it is determined that the brake wear threshold is reached, the method proceeds to block 1108 where a number of good future use cycles is determined, and the method 1100 ends. For example, if the brake wear threshold is strictly reached or exceeded after a given number of predicted future use cycles, the number of good future use cycles is one less than that given number. For example, if the brake wear threshold is expected to be reached in the very next predicted future use cycle, the number of good future use cycles is determined as the number of predicted future use cycles for which method 1100 has been performed thus far.

If, for example, both the thresholds are reached, the method 1100 proceeds to block 1108 where a number of remaining good future use cycles, before either the thermal oxidation threshold or the brake wear threshold is reached, is determined and the method 1100 ends. In this example, if at least one of the thresholds is strictly reached or exceeded after a given number of predicted future use cycles, the number of good future use cycles is one less than that given number. Otherwise, the number of good future use cycles is determined as the number of predicted future use cycles for which the method 1100 has been performed thus far.

If the brake wear threshold is not reached, the method 1100 proceeds to block 1110 and blocks 1102 to 1110 are repeated for the next predicted future use cycle.

In this way, a number of good future use cycles may be predicted based on which of the thermal oxidation threshold and the brake wear threshold is reached first. This is because, the brake assembly 200 may require a service or replacement, or a component of the brake assembly 200 may require a service or replacement once the first of these thresholds is reached. It will be appreciated, for example, that brake assembly 200 will not continue to be used if the thermal oxidation threshold is reached but the brake wear threshold is not. It should also be appreciated that blocks of the method 1100 may be performed in any suitable order. For example block 1104 may be performed before block 1102 and/or block 1110 may be performed before block 1106.

One or more of the above described methods, namely the methods 600, 700, 1000 and 1100, or any of their variations (e.g. live determination of oxidation or brake wear, or prediction of future thermal oxidation state or future brake wear, etc.) may be performed by a processor of the computing system 106 of the aircraft 100, for example, based on instructions stored in a computer readable storage medium of the computing system 106. For example, monitoring of the thermal oxidation state (subsequent to use cycles or live) may be performed by a processor of computing system 106. Alternatively, or in addition, monitoring of the brake wear (subsequent to use cycles or live) may be performed by a processor of the computing system. Alternatively, or in addition to any of these examples, predictions relating to the future thermal oxidation state and/or the future brake wear state may be performed by a processor of the computing system 106. The methods may be performed, for example, using data from the instruments 108. For example, temperature data as measured by the temperature sensor 216 may be used. In the case of prediction, the future temperature profiles and/or other predicted data may be predicted by a processor of the computing system 106. Alternatively, the data for prediction may be determined on a computing system not on board the aircraft 100, and may be stored in a computer readable storage medium of the computing system 106.

In the foregoing examples, the apparatus 300 is described as being installed on a vehicle such as the aircraft 100. The apparatus 300 may be comprised in the computing system 106 of the aircraft 100. For example, the first controller 302 may be implemented by a processor of the computing system 106. Said processor may implement instruction stored on a computer readable storage medium of the computing system 106 to implement the functions of the first controller 302. The braking system 214 may be implemented by the computing system 106 in a similar manner. Alternatively, the apparatus 300 and/or the braking system 214 may be implemented by items of apparatus separate to the computing system 106. For example, there may be dedicated processors to implement the functions of the first controller 302 and/or the second controller 304 provided on the aircraft 100. In some examples, the foregoing described functions and processes of the apparatus 300 may be performed by the braking system 214. In some examples, the first controller 302 and the second controller 304 may be implemented by the same processor or the same group of processors. In some examples, the first controller 302 and the second controller 304 may be implemented by different processors or different groups of processors.

All or part of the instructions for performing the aforementioned processes may be generated and/or the processes may be performed using any suitable software or combination of software. In one example, "MATLAB" and/or "SCADE" may be used to generate all or part of the instructions for respective processors to carry out any of the aforementioned processes. In other examples, other software packages may be used. For example, any suitable programming language, development environment, software package, or the like may be used. Other examples of programming languages include PYTHON, C++, C, JAVASCRIPT, FORTRAN etc.

It is to noted that the term "or" as used herein is to be interpreted to mean "and/or", unless expressly stated otherwise. Although the invention has been described herein with reference to one or more preferred examples, it will be appreciated that various changes or modifications may be made without departing from the scope of the invention as defined in the appended claims.

**Claims**

1.    An apparatus (300) comprising:

a controller (302) configured to:
generate (402) a first indication for a vehicle braking system (214) depending upon an oxidation state of a wheel brake (200) of the vehicle, wherein the controller (302) is configured to:

determine (402a) a brake temperature characteristic criterion of the brake according to the oxidation state of the brake;
determine (402b) whether a temperature characteristic of the brake satisfies the brake temperature characteristic criterion; and
generate (402c) the first indication for the braking system depending upon whether the brake temperature characteristic satisfies the brake temperature characteristic criterion, and

wherein:

the temperature characteristic of the brake comprises a temperature of the brake;
**characterised in that** the brake temperature characteristic criterion is satisfied if the temperature of the brake exceeds a brake temperature threshold; and
the controller (302) is configured such that the higher the level of thermal oxidation of the brake, the lower the brake temperature threshold of the determined brake temperature characteristic criterion is.

2.    The apparatus according to claim 1, wherein:

the controller (302) receives an indication of the temperature characteristic of the brake from a temperature sensor associated with the brake; or
the controller (302) receives a predicted temperature characteristic from a brake temperature prediction function as the temperature characteristic of the brake.

3.    The apparatus according to claim 1 or claim 2, wherein the controller (302) is configured to:

monitor (406) the temperature characteristic of the brake; and
if the temperature characteristic of the brake no longer satisfies the brake temperature characteristic criterion, generate (410) a second indication for the braking system that the temperature characteristic of the brake no longer satisfies the brake temperature characteristic criterion.

4.    The apparatus according to any one of claims 1 to 3,
wherein, optionally, if the thermal oxidation state of the brake is below a predetermined thermal oxidation level, a first brake temperature characteristic criterion is selected which comprises a first temperature threshold,
wherein, optionally, if the thermal oxidation state of the brake is above the predetermined thermal oxidation level, a second brake temperature characteristic criterion is selected which comprises a second temperature threshold lower than the first temperature threshold,
wherein, optionally, the second brake temperature characteristic criterion is selected based on the difference between the thermal oxidation state of the brake and the predetermined thermal oxidation level,
wherein, optionally, the first temperature threshold is above 400°C.

5.    A vehicle comprising the apparatus according to any one of claims 1 to 4 and a braking system (214) comprising:
a further controller (304) configured to:

receive the first indication; and
control the operation of the brake based on the first indication.

6.  The vehicle according to claim 5, wherein:
    the further controller (304) is configured to:

    receive a second indication that the temperature characteristic of the brake no longer satisfies the brake temperature characteristic criterion; and
    control the brake selectively to be enabled or disabled based on the received indication.

7.  The vehicle according to claim 5 or claim 6, wherein the further controller (304) is configured to control (404) the brake to be disabled if it receives the first indication,
    wherein, optionally, the further controller (404) is configured to control (412) the brake to be enabled if it receives the second indication.

8.  The vehicle according to claim 7, wherein the vehicle is an aircraft (100) and the further controller (304) is configured to disable a brake if a taxiing criterion is met, wherein the taxiing criterion comprises one or more of:

    an aircraft speed threshold defined such that an aircraft speed less than or equal to the aircraft speed threshold satisfies the predefined taxiing criterion; and
    a particular flight phase indicated by a flight phase indication system of the aircraft.

9.  The vehicle according to claim 7 or claim 8, wherein the further controller (304) is configured to:

    receive (502) a braking request, the braking request comprising information relating to a requested braking intensity;
    determine (504), based on the information related to the requested braking intensity, whether the requested braking intensity exceeds a braking intensity threshold; and
    if the requested braking intensity exceeds the braking intensity threshold, enable (506) at least one disabled brake.

10. The vehicle according to any one of claims 5 to 9, wherein the vehicle is an aircraft (100) comprising a temperature sensor (216) configured to measure a temperature of a wheel brake (200) of the aircraft (100) and to transmit the temperature measurement to the apparatus (300).

11. A method (400) for controlling at least one wheel brake (200) of an aircraft (100), the method (400) comprising:

    generating (402) a first indication depending upon an oxidation state of a wheel brake (200) of an aircraft (100); and
    controlling (404) the brake to be disabled based on the first indication,

    wherein the method (400) comprises:

    determining (402a) a brake temperature characteristic criterion of the brake according to the thermal oxidation state of the brake;
    determining (402b) whether a temperature characteristic of the brake satisfies the brake temperature characteristic criterion; and
    generating (402c) the first indication depending upon whether the brake temperature characteristic satisfies the brake temperature characteristic criterion, and wherein:

    the temperature characteristic of the brake comprises a temperature of the brake; **characterised in that** the brake temperature characteristic criterion is satisfied if the temperature of the brake exceeds a brake temperature threshold; and
    the higher the level of thermal oxidation of the brake, the lower the brake temperature threshold of the determined brake temperature characteristic criterion is.

12. The method according to claim 11 comprising:

(i) monitoring (406) the temperature characteristic of the brake;

(ii) determining (408) whether the temperature characteristic of the brake still satisfies the brake temperature characteristic criterion;

if the temperature characteristic of the brake no longer satisfies the brake temperature characteristic criterion:

generating (410) a second indication that the temperature characteristic of the brake no longer satisfies the brake temperature characteristic criterion; and

controlling (412) the brake to be enabled based on the second indication; and

if the temperature characteristic of the brake still satisfies the brake temperature characteristic criterion, repeating (i) and (ii).

13. The method according to claim 11 or claim 12 comprising:

receiving an indication of the temperature characteristic of the brake from a temperature sensor (216) associated with the brake; or

receiving a predicted temperature characteristic from a brake temperature prediction function as the temperature characteristic of the brake.

14. The method according to any one of claims 11 to 13,

wherein, optionally, if the thermal oxidation state of the brake is below a predetermined thermal oxidation level, a first brake temperature characteristic criterion is selected which comprises a first temperature threshold,

wherein, optionally, if the thermal oxidation state of the brake is above the predetermined thermal oxidation level, a second brake temperature characteristic criterion is selected which comprises a second temperature threshold lower than the first temperature threshold,

wherein, optionally, the second brake temperature characteristic criterion is selected based on the difference between the thermal oxidation state of the brake and the predetermined thermal oxidation level,

wherein, optionally, the first temperature threshold is above 400°C.

15. The method according to any one of claims 11 to 14, wherein the wheel brake is disabled if a predefined taxiing criterion is met, wherein the predefined taxiing criterion comprises one or more of:

an aircraft speed threshold defined such that an aircraft speed less than or equal to the aircraft speed threshold satisfies the predefined taxiing criterion; and

a particular flight phase indicated by a flight phase indication system of the aircraft.

16. The method according to any one of claims 11 to 15, wherein the method comprises:

receiving (502) a braking request, the braking request comprising information relating to a requested braking intensity;

determining (504), based on the information related to the requested braking intensity, whether the requested braking intensity exceeds a braking intensity threshold; and

if the requested braking intensity exceeds the braking intensity threshold, enabling (506) at least one disabled brake.

**Patentansprüche**

1. Einrichtung (300), umfassend:

eine Steuerung (302), die ausgelegt ist zum:

Erzeugen (402) einer ersten Angabe für ein Fahrzeugbremssystem (214) in Abhängigkeit von einem Oxidationszustand einer Radbremse (200) des Fahrzeugs,

wobei die Steuerung (302) ausgelegt ist zum:

Bestimmen (402a) eines Bremstemperatureigenschaftskriteriums der Bremse gemäß dem Oxidationszustand der Bremse;

Bestimmen (402b), ob eine Temperatureigenschaft der Bremse das Bremstemperatureigenschaftskriterium erfüllt; und

Erzeugen (402c) der ersten Angabe für die Bremsanlage in Abhängigkeit davon, ob die Bremstemperatureigenschaft das Bremstemperatureigenschaftskriterium erfüllt, und wobei:

die Temperatureigenschaft der Bremse eine Temperatur der Bremse umfasst;
**dadurch gekennzeichnet, dass**
das Bremstemperatureigenschaftskriterium erfüllt ist, wenn die Temperatur der Bremse eine Bremstemperaturschwelle überschreitet; und
die Steuerung (302) derart ausgelegt ist, dass je höher der Grad der thermischen Oxidation der Bremse ist, desto niedriger die Bremstemperaturschwelle des bestimmten Bremstemperatureigenschaftskriteriums ist.

2. Einrichtung nach Anspruch 1, wobei:

die Steuerung (302) eine Angabe der Temperatureigenschaft der Bremse von einem Temperatursensor in Verbindung mit der Bremse empfängt oder
die Steuerung (302) eine vorhergesagte Temperatureigenschaft von einer Bremstemperaturvorhersagefunktion als die Temperatureigenschaft der Bremse empfängt.

3. Einrichtung nach Anspruch 1 oder Anspruch 2, wobei die Steuerung (302) ausgelegt ist zum:

Überwachen (406) der Temperatureigenschaft der Bremse und
wenn die Temperatureigenschaft der Bremse das Bremstemperatureigenschaftskriterium nicht mehr erfüllt, Erzeugen (410) einer zweiten Angabe für die Bremsanlage, dass die Temperatureigenschaft der Bremse das Bremstemperatureigenschaftskriterium nicht mehr erfüllt.

4. Einrichtung nach einem der Ansprüche 1 bis 3,
wobei, wahlweise, wenn der Zustand der thermischen Oxidation der Bremse unter einem vorbestimmten Grad der thermischen Oxidation liegt, ein erstes Bremstemperatureigenschaftskriterium ausgewählt wird, das eine erste Temperaturschwelle umfasst,
wobei, wahlweise, wenn der Zustand der thermischen Oxidation der Bremse über einem vorbestimmten Grad der thermischen Oxidation liegt, ein zweites Bremstemperatureigenschaftskriterium ausgewählt wird, das eine zweite Temperaturschwelle umfasst, die niedriger als die erste Temperaturschwelle ist,
wobei, wahlweise, das zweite Bremstemperatureigenschaftskriterium basierend auf dem Unterschied zwischen dem Zustand der thermischen Oxidation der Bremse und dem vorbestimmten Grad der thermischen Oxidation ausgewählt wird,
wobei, wahlweise, die erste Temperaturschwelle über 400 °C liegt.

5. Fahrzeug, umfassend die Einrichtung nach einem der Ansprüche 1 bis 4 und eine Bremsanlage (214), umfassend:
eine weitere Steuerung (304), die ausgelegt ist zum:

Empfangen der ersten Angabe und
Steuern des Betriebs der Bremse basierend auf der ersten Angabe.

6. Fahrzeug nach Anspruch 5, wobei:
die weitere Steuerung (304) ausgelegt ist zum:

Empfangen einer zweiten Angabe, dass die Temperatureigenschaft der Bremse das Bremstemperatureigenschaftskriterium nicht mehr erfüllt; und
selektiven Steuern des Aktivierens oder Deaktivierens der Bremse basierend auf der empfangenen Angabe.

7. Fahrzeug nach Anspruch 5 oder Anspruch 6, wobei die weitere Steuerung (304) zum Steuern (404) des Deaktivierens der Bremse, wenn sie die erste Angabe empfängt, ausgelegt ist,
wobei, wahlweise, die weitere Steuerung (404) zum Steuern (412) des Aktivierens der Bremse, wenn sie die zweite Angabe empfängt, ausgelegt ist.

8. Fahrzeug nach Anspruch 7, wobei das Fahrzeug ein Luftfahrzeug (100) ist und die weitere Steuerung (304) zum Deaktivieren einer Bremse, wenn ein Rollkriterium erfüllt ist, ausgelegt ist, wobei das Rollkriterium eines oder mehrere umfasst von:

einer Luftfahrzeuggeschwindigkeitsschwelle, die derart definiert ist, dass eine Luftfahrzeuggeschwindigkeit kleiner oder gleich der Luftfahrzeuggeschwindigkeitsschwelle das vordefinierte Rollkriterium erfüllt; und
einer bestimmten Flugphase, die durch ein Flugphasenangabesystem des Luftfahrzeugs angegeben wird.

9. Fahrzeug nach Anspruch 7 oder Anspruch 8, wobei die weitere Steuerung (304) ausgelegt ist zum:

Empfangen (502) einer Bremsanforderung, die Bremsanforderung umfassend Informationen in Bezug auf eine angeforderte Bremsintensität;
Bestimmen (504), basierend auf den Informationen in Bezug auf die angeforderte Bremsintensität, ob die angeforderte Bremsintensität eine Bremsintensitätsschwelle überschreitet; und
wenn die angeforderte Bremsintensität die Bremsintensitätsschwelle überschreitet, Aktivieren (506) von zumindest einer deaktivierten Bremse.

10. Fahrzeug nach einem der Ansprüche 5 bis 9, wobei das Fahrzeug ein Luftfahrzeug (100) ist, umfassend einen Temperatursensor (216), der zum Messen einer Temperatur einer Radbremse (200) des Luftfahrzeugs (100) und zum Übertragen der Temperaturmessung an die Einrichtung (300) ausgelegt ist.

11. Verfahren (400) zum Steuern von zumindest einer Radbremse (200) eines Luftfahrzeugs (100), das Verfahren (400) umfassend:

Erzeugen (402) einer ersten Angabe in Abhängigkeit von einem Oxidationszustand einer Radbremse (200) eines Luftfahrzeugs (100) und
Steuern (404) des Deaktivierens der Bremse basierend auf der ersten Angabe, wobei das Verfahren (400) umfasst:

Bestimmen (402a) eines Bremstemperatureigenschaftskriteriums der Bremse gemäß dem Zustand der thermischen Oxidation der Bremse;
Bestimmen (402b), ob eine Temperatureigenschaft der Bremse das Bremstemperatureigenschaftskriterium erfüllt; und
Erzeugen (402c) der ersten Angabe in Abhängigkeit davon, ob die Bremstemperatureigenschaft das Bremstemperatureigenschaftskriterium erfüllt, und wobei:

die Temperatureigenschaft der Bremse eine Temperatur der Bremse umfasst;
**dadurch gekennzeichnet, dass**
das Bremstemperatureigenschaftskriterium erfüllt ist, wenn die Temperatur der Bremse eine Bremstemperaturschwelle überschreitet; und
je höher der Grad der thermischen Oxidation der Bremse ist, desto niedriger die Bremstemperaturschwelle des bestimmten Bremstemperatureigenschaftskriteriums ist.

12. Verfahren nach Anspruch 11, umfassend:

(i) Überwachen (406) der Temperatureigenschaft der Bremse;
(ii) Bestimmen (408), ob die Temperatureigenschaft der Bremse das Bremstemperatureigenschaftskriterium weiterhin erfüllt;
wenn die Temperatureigenschaft der Bremse das Bremstemperatureigenschaftskriterium nicht mehr erfüllt:

Erzeugen (410) einer zweiten Angabe, dass die Temperatureigenschaft der Bremse das Bremstemperatureigenschaftskriterium nicht mehr erfüllt; und
Steuern (412) des Aktivierens der Bremse basierend auf der zweiten Angabe und
wenn die Temperatureigenschaft der Bremse das Bremstemperatureigenschaftskriterium weiterhin erfüllt, Wiederholen von (i) und (ii).

13. Verfahren nach Anspruch 11 oder Anspruch 12, umfassend:

Empfangen einer Angabe der Temperatureigenschaft der Bremse von einem Temperatursensor (216) in Verbindung mit der Bremse oder

Empfangen einer vorhergesagten Temperatureigenschaft von einer Bremstemperaturvorhersagefunktion als die Temperatureigenschaft der Bremse.

14. Verfahren nach einem der Ansprüche 11 bis 13,
wobei, wahlweise, wenn der Zustand der thermischen Oxidation der Bremse unter einem vorbestimmten Grad der thermischen Oxidation liegt, ein erstes Bremstemperatureigenschaftskriterium ausgewählt wird, das eine erste Temperaturschwelle umfasst,
wobei, wahlweise, wenn der Zustand der thermischen Oxidation der Bremse über einem vorbestimmten Grad der thermischen Oxidation liegt, ein zweites Bremstemperatureigenschaftskriterium ausgewählt wird, das eine zweite Temperaturschwelle umfasst, die niedriger als die erste Temperaturschwelle ist,
wobei, wahlweise, das zweite Bremstemperatureigenschaftskriterium basierend auf dem Unterschied zwischen dem Zustand der thermischen Oxidation der Bremse und dem vorbestimmten Grad der thermischen Oxidation ausgewählt wird,
wobei, wahlweise, die erste Temperaturschwelle über 400 °C liegt.

15. Verfahren nach einem der Ansprüche 11 bis 14, wobei die Radbremse deaktiviert wird, wenn ein vordefiniertes Rollkriterium erfüllt ist, wobei das vordefinierte Rollkriterium eines oder mehrere umfasst von:

einer Luftfahrzeuggeschwindigkeitsschwelle, die derart definiert ist, dass eine Luftfahrzeuggeschwindigkeit kleiner oder gleich der Luftfahrzeuggeschwindigkeitsschwelle das vordefinierte Rollkriterium erfüllt; und
einer bestimmten Flugphase, die durch ein Flugphasenangabesystem des Luftfahrzeugs angegeben wird.

16. Verfahren nach einem der Ansprüche 11 bis 15, wobei das Verfahren umfasst:

Empfangen (502) einer Bremsanforderung, die Bremsanforderung umfassend Informationen in Bezug auf eine angeforderte Bremsintensität;
Bestimmen (504), basierend auf den Informationen in Bezug auf die angeforderte Bremsintensität, ob die angeforderte Bremsintensität eine Bremsintensitätsschwelle überschreitet; und
wenn die angeforderte Bremsintensität die Bremsintensitätsschwelle überschreitet, Aktivieren (506) von zumindest einer deaktivierten Bremse.

## Revendications

1. Appareil (300) comprenant :

une unité de commande (302) configurée pour :

générer (402) pour un système de freinage de véhicule (214) une première indication en fonction d'un état d'oxydation d'un frein de roue (200) du véhicule, l'unité de commande (302) étant configurée pour :

déterminer (402a) un critère de caractéristique de température de frein du frein en fonction de l'état d'oxydation du frein ;
déterminer (402b) qu'une caractéristique de température du frein satisfait ou non le critère de caractéristique de température de frein ; et
générer (402c) pour le système de freinage la première indication selon que la caractéristique de température de frein satisfait ou non le critère de caractéristique de température de frein, et

dans lequel :

la caractéristique de température du frein comprend une température du frein ;
**caractérisé en ce que**
le critère de caractéristique de température de frein est satisfait si la température du frein dépasse un seuil de température de frein ; et
l'unité de commande (302) est configurée de telle sorte que plus le niveau d'oxydation thermique du frein est élevé, plus le seuil de température de frein du critère de caractéristique de température de frein déterminé est bas.

**2.** Appareil selon la revendication 1, dans lequel :

l'unité de commande (302) reçoit une indication de la caractéristique de température du frein à partir d'un capteur de température associé au frein ; ou
l'unité de commande (302) reçoit une caractéristique de température prédite à partir d'une fonction de prédiction de température de frein en tant que caractéristique de température du frein.

**3.** Appareil selon la revendication 1 ou la revendication 2, dans lequel l'unité de commande (302) est configurée pour :

surveiller (406) la caractéristique de température du frein ; et
si la caractéristique de température du frein ne satisfait plus le critère de caractéristique de température de frein, générer (410) pour le système de freinage une seconde indication que la caractéristique de température du frein ne satisfait plus le critère de caractéristique de température de frein.

**4.** Appareil selon l'une quelconque des revendications 1 à 3,
dans lequel, facultativement, si l'état d'oxydation thermique du frein est inférieur à un niveau d'oxydation thermique prédéterminé, un premier critère de caractéristique de température de frein qui comprend un premier seuil de température est sélectionné,
dans lequel, facultativement, si l'état d'oxydation thermique du frein est supérieur au niveau d'oxydation thermique prédéterminé, un second critère de caractéristique de température de frein qui comprend un second seuil de température inférieur au premier seuil de température est sélectionné,
dans lequel, facultativement, le second critère de caractéristique de température de frein est sélectionné en fonction de la différence entre l'état d'oxydation thermique du frein et le niveau d'oxydation thermique prédéterminé,
dans lequel, facultativement, le premier seuil de température est supérieur à 400 °C.

**5.** Véhicule comprenant l'appareil selon l'une quelconque des revendications 1 à 4 et un système de freinage (214) comprenant :
une unité de commande supplémentaire (304) configurée pour :

recevoir la première indication ; et
commander le fonctionnement du frein en fonction de la première indication.

**6.** Véhicule selon la revendication 5, dans lequel :
l'unité de commande supplémentaire (304) est configurée pour :

recevoir une seconde indication que la caractéristique de température du frein ne satisfait plus le critère de caractéristique de température de frein ; et
commander le frein pour sélectivement l'activer ou le désactiver en fonction de l'indication reçue.

**7.** Véhicule selon la revendication 5 ou la revendication 6, dans lequel l'unité de commande supplémentaire (304) est configurée pour commander (404) la désactivation du frein si elle reçoit la première indication,
dans lequel, facultativement, l'unité de commande supplémentaire (404) est configurée pour commander (412) l'activation du frein si elle reçoit la seconde indication.

**8.** Véhicule selon la revendication 7, dans lequel le véhicule est un aéronef (100) et l'unité de commande supplémentaire (304) est configurée pour désactiver un frein si un critère de roulage au sol est satisfait, le critère de roulage au sol comprenant :

un seuil de vitesse d'aéronef défini de telle sorte qu'une vitesse d'aéronef inférieure ou égale au seuil de vitesse d'aéronef satisfasse le critère de roulage au sol prédéfini ; et/ou
une phase de vol particulier indiquée par un système d'indication de phase de vol de l'aéronef.

**9.** Véhicule selon la revendication 7 ou la revendication 8, dans lequel l'unité de commande supplémentaire (304) est configurée pour :

recevoir (502) une requête de freinage, la requête de freinage comprenant des informations relatives à une intensité de freinage requise ;
déterminer (504), en fonction des informations relatives à l'intensité de freinage requise, que l'intensité de freinage requise dépasse ou non un seuil d'intensité de freinage ; et

si l'intensité de freinage requise dépasse le seuil d'intensité de freinage, activer (506) au moins un frein désactivé.

10. Véhicule selon l'une quelconque des revendications 5 à 9, dans lequel le véhicule est un aéronef (100) comprenant un capteur de température (216) configuré pour mesurer une température d'un frein de roue (200) de l'aéronef (100) et transmettre la mesure de température à l'appareil (300).

11. Procédé (400) de commande d'au moins un frein de roue (200) d'un aéronef (100), le procédé (400) comprenant :

la génération (402) d'une première indication en fonction d'un état d'oxydation d'un frein de roue (200) d'un aéronef (100) ; et

la commande (404) de la désactivation du frein en fonction de la première indication, le procédé (400) comprenant :

la détermination (402a) d'un critère de caractéristique de température de frein du frein en fonction de l'état d'oxydation thermique du frein,

la détermination (402b) qu'une caractéristique de température du frein satisfait ou non le critère de caractéristique de température de frein ; et

la génération (402c) de la première indication selon que la caractéristique de température de frein satisfait ou non le critère de caractéristique de température de frein, et dans lequel :

la caractéristique de température du frein comprend une température du frein ;

**caractérisé en ce que**

le critère de caractéristique de température de frein est satisfait si la température du frein dépasse un seuil de température de frein ; et

plus le niveau d'oxydation thermique du frein est élevé, plus le seuil de température de frein du critère de caractéristique de température de frein déterminé est bas.

12. Procédé selon la revendication 11 comprenant :

(i) la surveillance (406) de la caractéristique de température du frein ;

(ii) la détermination (408) que la caractéristique de température du frein satisfait toujours le critère de caractéristique de température de frein ;

si la caractéristique de température du frein ne satisfait plus le critère de caractéristique de température de frein :

la génération (410) d'une seconde indication que la caractéristique de température du frein ne satisfait plus le critère de caractéristique de température de frein ; et

la commande (412) de l'activation du frein en fonction de la seconde indication ; et

si la caractéristique de température du frein satisfait toujours le critère de caractéristique de température de frein, la répétition de (i) et (ii).

13. Procédé selon la revendication 11 ou la revendication 12 comprenant :

la réception d'une indication de la caractéristique de température du frein à partir d'un capteur de température (216) associé au frein ; ou

la réception d'une caractéristique de température prédite à partir d'une fonction de prédiction de température de frein en tant que caractéristique de température du frein.

14. Procédé selon l'une quelconque des revendications 11 à 13,

dans lequel, facultativement, si l'état d'oxydation thermique du frein est inférieur à un niveau d'oxydation thermique prédéterminé, un premier critère de caractéristique de température de frein qui comprend un premier seuil de température est sélectionné,

dans lequel, facultativement, si l'état d'oxydation thermique du frein est supérieur au niveau d'oxydation thermique prédéterminé, un second critère de caractéristique de température qui comprend un second seuil de température inférieur au premier seuil de température est sélectionné,

dans lequel, facultativement, le second critère de caractéristique de température de frein est sélectionné en fonction de la différence entre l'état d'oxydation thermique du frein et le niveau d'oxydation thermique prédéterminé,

dans lequel, facultativement, le premier seuil de température est supérieur à 400 °C.

15. Procédé selon l'une quelconque des revendications 11 à 14, dans lequel le frein de roue est désactivé si un critère de roulage au sol prédéfini est satisfait, le critère de roulage au sol prédéfini comprenant :

un seuil de vitesse d'aéronef défini de telle sorte qu'une vitesse d'aéronef inférieure ou égale au seuil de vitesse d'aéronef satisfasse le critère de roulage au sol prédéfini ; et/ou
une phase de vol particulier indiquée par un système d'indication de phase de vol de l'aéronef.

16. Procédé selon l'une quelconque des revendications 11 à 15, le procédé comprenant :

la réception (502) d'une requête de freinage, la requête de freinage comprenant des informations relatives à une intensité de freinage requise ;
la détermination (504), en fonction des informations relatives à l'intensité de freinage requise, que l'intensité de freinage requise dépasse ou non un seuil d'intensité de freinage ; et
si l'intensité de freinage requise dépasse le seuil d'intensité de freinage, l'activation (506) d'au moins un frein désactivé.

Figure 1

Figure 2

Figure 3

**400**

402

Generate a first indication depending
upon an oxidation state of a brake

404

Control the brake to be disabled
based on the first indication

Figure 4a

**400**

Determine a brake temperature characteristic criterion according to the thermal oxidation state of the brake

402a

Does a temperature characteristic of the brake satisfy the brake temperature characteristic criterion?

402b

No → End

Yes

402c

Generate the first indication

404

Control the brake to be disabled based on the first indication

Figure 4b

Monitor the temperature of the brake

406

Does the temperature characteristic of the brake still satisfy the brake temperature characteristic criterion?

408

Yes

No

410

Generate a second indication that the temperature characteristic of the brake no longer satisfies the brake temperature characteristic criterion

412

Control the brake to be enabled based on the second indication

Figure 4c

**500**

Receive a braking request
comprising information relating
to a requested braking intensity

502

504

Does requested
braking intensity
exceed a braking
intensity
threshold

No → End

Yes

506

Enable at least one
disabled brake

Figure 5

**600**

602

Specify temperature profile and
initial thermal oxidation state of
brake

604

Determine a thermal oxidation state
after the braking event using a
thermal oxidation model

Figure 6

**700**

Specify temperature profile and initial thermal oxidation state of brake — 702

Compare the temperature profile to a set of temperature criteria — 704

One or more temperature criteria met? — 706 → No → End

Yes

Identify a high temperature event corresponding to the braking event — 708

Determine the interval of time taken by the high temperature event as the high temperature interval — 710

Determine a high temperature event value of the brake for the high temperature interval — 712

Determine oxidation rate parameter based on high temperature event value and physical characteristic information of brake — 714

Select thermal oxidation model based on initial thermal oxidation state — 716

Determine updated thermal oxidation state for the high temperature event — 718

Figure 7

Figure 8

Figure 9

**1000**

Determine energy input into
brake during braking event

1002

Determine the density parameter of
the brake

1004

Determine amount of brake wear due
to braking event

1006

Figure 10

**1100**

Repeat block 1102
to block 1110 — 1110

Predict a future thermal oxidation
state after a predicted future use
cycle — 1102

Predict a future brake wear amount
after the predicted future use cycle — 1104

Is the thermal oxidation
threshold and/or the
brake wear threshold
substantially reached? — 1106

Yes

No

Determine a
number of
good future
use cycles and
end method — 1108

Figure 11

**REFERENCES CITED IN THE DESCRIPTION**

**Patent documents cited in the description**

- EP 3088266 A1
- WO 2017062590 A1
- US 2015025735 A1
- GB 1803203 A